# EUROPEAN PATENT SPECIFICATION

(11) **EP 3 015 215 B1**
(45) Date of publication and mention of the grant of the patent: **08.08.2018**
(21) Application number: 14818601.8
(22) Date of filing: 27.06.2014
(51) Int. Cl.: B23K 11/16, B23K 11/11, B23K 11/24, B23K 11/31, B23K 101/00, B23K 103/04

(54) **WELDED STRUCTURAL MEMBER AND WELDING METHOD**
GESCHWEISSTES BAUELEMENT UND SCHWEISSVERFAHREN
ÉLÉMENT STRUCTUREL SOUDÉ ET PROCÉDÉ DE SOUDAGE

(30) Priority: 27.06.2013 JP 2013135642
(43) Date of publication of application: 04.05.2016
(73) Proprietor: Neturen Co., Ltd., Tokyo 141-8639 (JP)
(72) Inventor: HATTA Munehisa, Tokyo 141- 8639 (JP); KANAI Takahiko, Tokyo 141-8639 (JP); OKA Kazutomi, Tokyo 141-8639 (JP); ITO Atsushi, Tokyo 141-8639 (JP); IKUTA Fumiaki, Tokyo 141-8639 (JP); KAWASAKI Kazuhiro, Tokyo 141-8639 (JP)
(74) Representative: Isarpatent
(86) International application number: PCT/JP2014/067243
(87) International publication number: WO 2014/208747

(56) References cited:
- WO-A1-2011/013793
- JP-A- H06 114 563
- JP-A- 2013 086 125
- US-A1- 2008 203 139
- US-A1- 2008 203 139
- US-A1- 2012 129 006

## Description

### Technical Field

The present invention relates to a welding structural member and a welding method as defined in the preamble of claims 1 and 6 (see, for example, US2012/129006 A1). More specifically, the present invention relates to a welding structural member having a highly ductile spot-welded portion and a method for welding the structural member.

### Background Art

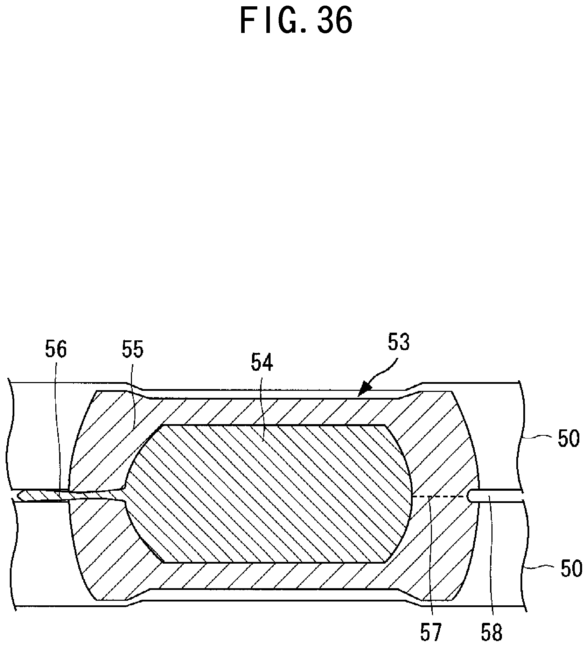

A spot welding device is used to weld overlapped steel plates. FIG. 36 is a cross-sectional view schematically showing spot welding of steel plates 50 generally performed. As shown in FIG. 36, the spot welding is performed by sandwiching an overlapped portion of steel plates 50 by a pair of electrodes 52, and applying predetermined force to this electrode pair 52 in a direction of the arrow to pressurize the steel plates 50. A large current on the order of kA is then fed to the electrodes 52 while the pressurized state is maintained to instantaneously melt the compressed part of the steel plates 50 by Joule heating, so-called resistance heating. A spot welding is performed in this way by forming a molten mass having predetermined diameter called a nugget 54 (Non-patent Literature 1 for example). The nugget 54 is also called molten and solidified part.

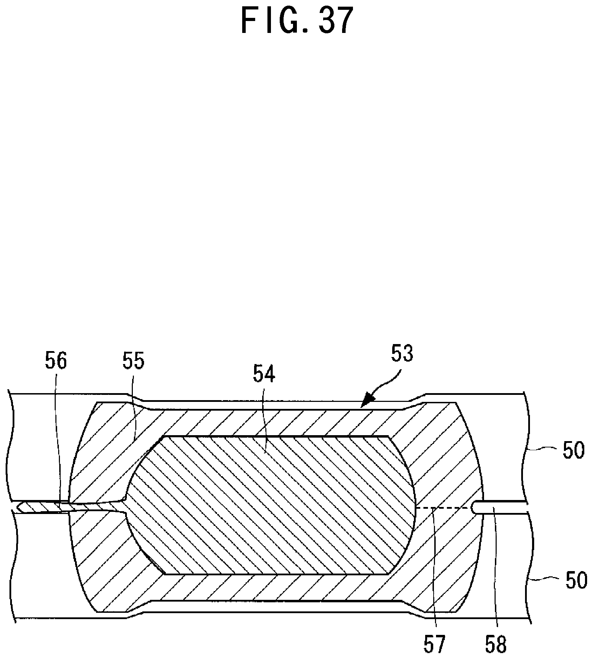

FIG. 37 is a detailed cross-sectional view of a portion welded by conventional spot welding. As shown in FIG. 37, a spot-welded part 53 includes a molten and solidified part 54, a heat-affected zone 55 surrounding the molten and solidified part 54, a corona bond 57 formed on the border between steel plates 50, 50 in a heat-affected zone 55, and a void 58 that may be formed on the border between the heat-affected zone 55 and the steel plates 50, 50. The heat-affected zone 55 is also called HAZ. The corona bond 57 and the void 58 are also called compressed part and sheet separation point respectively.

Furthermore, an expulsion 56 may be formed in the void 58. The expulsion 56 is escaping of molten steel from the molten and solidified part 54 to outside through the heat-affected zone 55 during spot welding. The expulsion occurs in the void 58 between overlapped steel plates 50, 50, forming a part of the molten and solidified part 54. The expulsion 56 is also called an expulsion at edge. Once the expulsion 56 occurs, a blow hole, which is a spherical cavity, may be formed within the welded part 53, or splashed expulsion 56 may attach to a part of the steel plates other than the spot-welded part 53. The occurrence of the expulsion 56 is undesirable because a defect may result in a painting process performed after spot welding. At present, however, expulsions 56 are occurring unavoidably.

By the way, with spot welding performed in vehicle production lines, high-tension steel plates have recently been used as a raw material for vehicles in order to ensure compatibility between the weight reduction and the safety of vehicles.

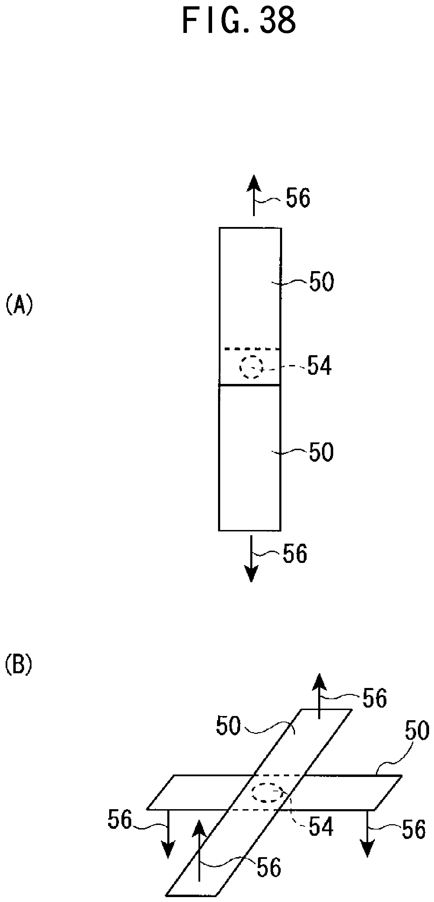

FIG. 38 is a plan view of samples used for a tensile test to examine the spot welding strength of high-tension steel plates, where (A) shows a lap joint sample, and (B) shows a cross joint sample. With the lap joint sample shown in FIG. 38 (A), two rectangular steel plates 50 are overlapped at their ends in a longitudinal direction, and spot-welded at the ends. With the cross joint sample shown in FIG. 38(B), two rectangular steel plates 50 are crossed in a shape of a cross, and this crossed part is spot-welded. The part in mostly elliptical shape enclosed by a dotted line is the nugget 54 formed by welding. The force 56 applied in a cross tension test is shown by the arrows.

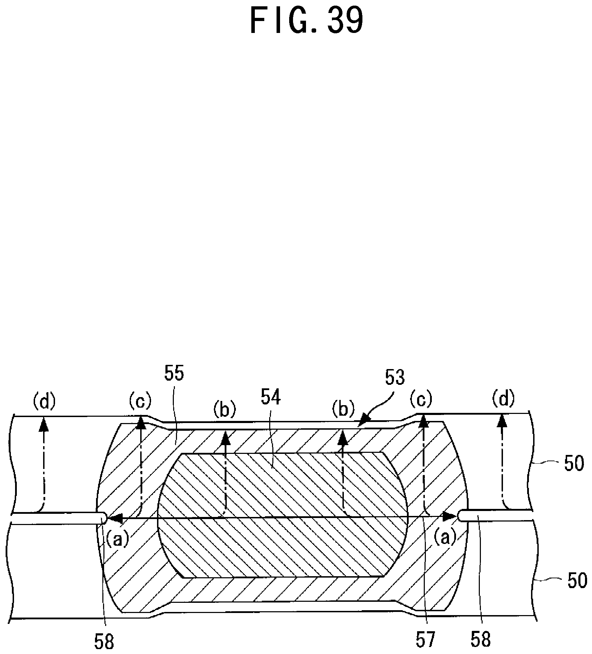

FIG. 39 schematically shows breaking patterns of a spot-welded part in a cross tension test. As shown in FIG. 39, the breaking patterns are classified into (a) a surface rupture within the nugget, (b) a plug rupture within the nugget, (c) a plug rupture within the heat-affected zone, (d) a rupture of the base material, and (e) a composite rupture which is not shown. A composite rupture is combination of patterns in (b) to (d) described above. Generally, the cross rupture strength tends to increase as the position of rupture transfers from (b) to (d) in the above breaking patterns.

It has been reported that in spot welding of high-tension steel plates, the peel strength of a cross joint hardly increases with the increase in material strength, but rather stable strength can hardly be obtained. The reason why the stable tensile strength cannot be obtained in peeling of cross joints is assumed to be extremely high concentration of stress on the circumference of the nugget 54. Under such circumstances, from a viewpoint of ensuring ductility of a welded region, limitations are set in compositions and combinations with other materials at present when using high-strength steel plates for vehicles. For example, the amount of carbon is maintained at a certain level or lower to prevent welded regions from becoming too hard.

Meanwhile, when using high-tension steel plates, the weight of a vehicle body can be trimmed efficiently, but high-tension steel plates having improved strength and ductility at the same time are desired. By further improving the strength of steel plates for vehicles, more weight reduction is expected. By further improving the ductility of steel plates for vehicles, press molding performance and sufficient deformability as products in case of a crash can be ensured. Generally, with the increase in the strength of steel plates for vehicles, their ductility tends to decrease. To improve the strength and ductility of steel plates for vehicles themselves, it is efficient to increase the amount of carbon in materials. However, in spot welding of steel plates for vehicles, since spot-welded regions become harder and more brittle in proportion to the carbon content, the stable and sufficient strength has hardly been ensured.

Various efforts have been made to solve the above problem in the strength of spot-welded part by devising welding methods. For example, an attempt is being made to perform tempering by subsequent energization after welded part is molded into a predetermined size. However, in resistance spot welding used for assembling vehicles, it is required to maintain the process time per point in as short as one second. When tempering is performed by subsequent energization with current welding facilities, the effect of the tempering becomes quite limited. Or, to ensure sufficient effect of tempering, the process time far exceeding the required time is necessary. The reason is that since the part directly under electrodes is energized when the tempering is performed using a conventional welding machine, the position requiring the effect of tempering deviates from the position heated mainly.

In conventional spot welding, the ensuring the strength of welded part was the attempt to ensure the ductility of molten and solidified part. In the heat-affected zone around a nugget, a region of weak bonded state called corona bond exists. This bonded state has been considered not to affect the bonding strength of spot-welded part because the corona bond is weak. In other words, the hardness of this region has been considered to be determined by the material composition of steel plates. That is why no attempts have been made to improve the strength and ductility or the strength in the bonded state in this region.

Patent Literature 1 discloses a spot welding device having a pair of electrodes and a spot welding device equipped with a high-frequency induction heating means having a heating coil installed by being wrapped around one of the pair of electrodes. This high-frequency induction heating means includes the heating coil for heating the part of a work to be welded and a high-frequency power supply for supplying high-frequency power to the heating coil.

As steel ensuring high strength and high ductility at the same time, a dual-phase steel having fine crystal grains has been studied, and deposition of carbon has been found to be an effective means (Patent Literature 2). To deposit carbon, it is necessary to ensure high carbon content in the material. However, when the carbon content increases, the spot-welded part becomes too hard and brittle, causing junction strength to decrease significantly. That is the reason why the carbon content of steel plates generally used for vehicles has been maintained to be around 0.15% by weight or lower. Meanwhile, the shape of electrodes for spot welding and energization conditions have been studied. It was found thus far that the spot-welded region formed by energizing electrodes is cooled down rapidly, and thus the metal structure in the molten and solidified part and the heat-affected zone becomes martensite structure as a result of this cooling. However, no further studies have been made.

Patent Literature 3 discloses a method for spot-welding overlapped steel plates by feeding low-frequency power and then high-frequency power.

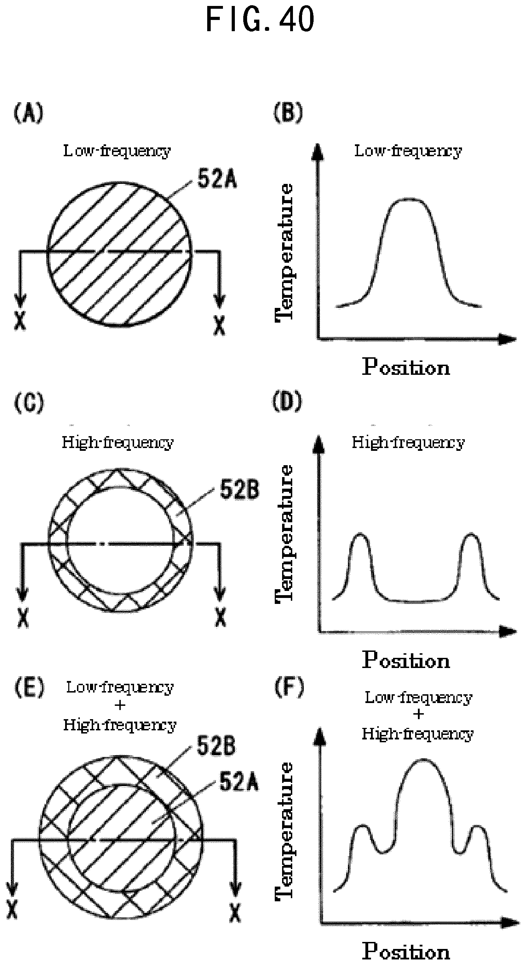

FIG. 40 shows heating conditions of steel plates in Patent Literature 3. FIG. 40 (A) is a plan view showing a region of steel plates 50 heated by low-frequency current only. The major heated region is inside a circle 52A, which is a projection of an axial section of electrodes 52 on the steel plates 50. FIG. 40 (B) is temperature distribution of FIG. 40 (A) in X-X direction. The inside of the circle 52A, the projection of the axial section of the electrodes 52 on the steel plate 50, is heated intensely.

Meanwhile, high-frequency current concentrates on the surface and the outer peripheral region of the electrodes 52. The difference in distribution of low-frequency current and that of high-frequency current is related to so-called skin depth.

FIG. 40 (C) is a plan view showing a region of steel plates 50 heated by high-frequency current only. The major heated region is the outer periphery of the projection of the axial cross section of the electrodes 52 (FIG. 36) on the steel plates 50 and its surrounding area, namely a ring-shaped proximity region 52B constituting an outside region of the circle. FIG. 40 (D) is the temperature distribution of FIG. 40 (C) in X-X direction. In the steel plates 50, the outer periphery of the projection of the axial cross section of the electrodes 52 on the steel plates 50 and its surrounding area, namely the ring-shaped proximity region 52B, is heated by resistance heating.

In other words, when electric power is applied simultaneously to two overlapped steel plates 50 from low-frequency and high-frequency power supplies, as shown in FIG. 40 (E), inside the circle 52A, through which low-frequency power is fed, and the ring-shaped proximity region 52B, through which high-frequency power is fed, of the steel plates 50 are heated in overlapped state. Furthermore, the temperature distribution of the steel plates 50 caused by these currents is, as shown in FIG. 40 (F), superposition of the temperature distribution by low-frequency current (FIG. 40 (B)) and that by high-frequency current (FIG. 40 (D).

### Citation List

### Patent Literature

Patent Literature 1: JP 2005-211934 A
Patent Literature 2: JP 2007-332457 A
Patent Literature 3: WO 2011/JP2011/013793
Patent Literature 4: JP 4006513 B

### Non-patent Literature

Non-patent Literature 1: Japan Welding Society, "Welding/Bonding Handbook," Maruzen, Sept. 30, 1990, pp. 392-398
Non-patent Literature 2: M. Hayakawa, S. Matsuoka, "Structural Analysis of Tempered Martensite under an Atomic Force Microscope," Materia Japan, Vol. 43, No. 9, pp. 717-723, 2004

### Summary of Invention

### Technical Problem

In conventional spot welding, an attempt to ensure the strength of welded part was started with the technology disclosed in Patent Literature 3. However, the improvement in the strength of molten and solidified part is further required.

In view of the above problem, a first objective of the present invention is to provide a welded structural member having a spot-welded part with sufficient strength and ductility and ensuring high rupture strength proven by a rupture test such as the cross English Translation of PCT/2014/067243 tensile test. A second objective of the present invention is to provide a method for welding such a structural member.

### Solution to Problem

To achieve the first objective described above, a welded structural member according to the present invention is defined in claim 1.

In the above structure, the metal structure of the heat-affected zone and that of the molten and solidified part are preferably in a tempered martensite structure. The steel plates in the heat-affected zone are preferably bonded by solid-phase bonding. A crack on the welded part preferably progresses along a region other than the molten and solidified part as a rupture path in a cross tensile test. This welded part preferably has a bonding strength allowing a crack as a rupture path in a cross tensile test to change within the heat-affected zone.

According to the above structure, a welded structural member whose spot-welded part has high strength, high ductility, and high rupture strength proven by a rupture test such as the cross tensile test can be obtained. It is desirable that the welded part be cooled in a cooling period to a temperature lower than the temperature allowing martensitic transformation of the steel plates to finish.

To achieve the second objective described above, a welding method according to the present invention is defined in claim 6.

In the above configuration, a pressurization to the electrodes may be terminated when the power having the second frequency has been applied for a predetermined period of time.

According to the above configuration, by sandwiching the overlapped steel plates by the pair of electrodes, performing resistance heating to form a molten and solidified part, and heating a peripheral region of the molten and solidified part by high-frequency power having higher frequency than DC power or low-frequency power, a welded structural member having high strength and ductility can be produced.

### Advantageous Effects of Invention

According to the present invention, the welded structural member including spot-welded part having high strength, high ductility, and high rupture strength proven by the cross tensile test, and the welding method can be provided.

### Brief Description of Drawings

FIG. 1 is a drawing schematically showing an example of the structure of a welding device for spot-welding a welded structural member according to an embodiment of the present invention.
FIG. 2 is an electric circuit diagram of the welding device shown in FIG. 1.
FIG. 3 is a chart showing an example of heating waveform according to the present invention.
FIG 4 is a cross-sectional view schematically showing current distribution generated on two overlapped steel plates exhibited when the power is applied simultaneously from low-frequency and high-frequency power supplies.
FIG. 5 is a cross-sectional view showing the heated state of two overlapped steel plates by high-frequency current.
FIG. 6 is a drawing schematically describing cooling of steel plates in a cooling period.
FIG. 7 is a drawing schematically describing the heating of steel plates in a third energization period by high-frequency power.
FIG. 8 is a drawing schematically describing tempering after application of high-frequency power.
FIG. 9 is a cross-sectional view showing the heated state of three overlapped steel plates by high-frequency current
FIG. 10 is a chart showing the JIS classification of rupture patterns in the cross tensile test of spot-welded part, where (a) shows interfacial rupture, (b) shows the partial plug rupture, and (c) and (d) show the plug rupture.
FIG. 11 shows an example of waveform of electric power applied from the low-frequency and the high-frequency power supplies measured by an oscilloscope.
FIG. 12 is a chart schematically describing application of power from the low-frequency power supply in Comparative Example 1.
FIG. 13 is a chart showing the energization pattern in Comparative Example 2.
FIG. 14 is a chart schematically describing application of power from the low-frequency power supply and the heat treatment in an electric furnace in Comparative Example 3
FIG. 15 is a chart showing an example of hardness distribution on a cross section almost at the center of the spot-welded part of the spot welded members produced in Example 1 and Comparative Examples 1 and 3.
FIG. 16 is a chart showing an example of hardness distribution on a cross section almost at the center of the spot-welded part of the spot-welded member produced in Comparative Example 2.
FIG. 17 is a cross-sectional drawing showing a region of welded part of steel plates whose structure was observed.
FIG. 18 (a) to (d) are optical images respectively showing the structure of the cross-sectional surface at the end of a nugget in Example 1, and Comparative Examples 1, 2, and 3.
FIG. 19 is a chart showing the relation between tension, namely stroke, and force F in the cross tensile test in Example 1, and Comparative Examples 1 and 3.
FIG. 20 is a chart showing the relation between stroke and force F in a cross tensile test in Comparative Example 2.
FIG. 21 provides optical images showing the cross section of the nugget in welded part having ruptured in a cross tensile test, where (a) shows the cross section in Example 1, (b) that of Comparative Example 1, (c) that of Comparative Example 2 and (d) that of Comparative Example 3.
FIG. 22 is a chart showing the breaking force of the spot-welded member produced in Example 1 and Comparative Examples 1 and 3.
FIG. 23 is a chart showing the relation between the breaking force and the diameter of the nugget of the spot welded member produced in Example 1 and Comparative Examples 1 and 3.
FIG. 24 shows optical images of the appearance of the spot welded member produced in Example 1 and Comparative Examples 1 and 3 after a tensile test, where (a) is that of Example 1, (b) is that of Comparative Example 1, and (c) is that of Comparative Example 3.
FIG. 25 is a chart showing an example of hardness distribution of the cross section almost at the center of the spot welded part of the spot welded members manufactured in Example 2 and Comparative Examples 4 and 5.
FIG. 26 is a cross-sectional view showing the region of the welded part of steel plates whose structure was observed.
FIG. 27 is a cross-sectional view showing the region of the welded part of steel plates whose structure was observed, where (a) to (c) are optical images showing the structure of the cross section at the end of the nugget in Example 2 and Comparative Examples 4 and 5 respectively.
FIG. 28 is a chart showing the relation between stroke and force F in the cross tensile test in Example 2.
FIG. 29 shows optical images of the nugget of the welded part ruptured in a cross tensile test, where (a) shows the appearance and (b) shows the cross section.
FIG. 30 is a chart showing the relation between stroke and force F in a cross tensile test in Comparative Example 4.
FIG. 31 shows optical images of the cross section of the nugget in the welded part ruptured in the cross tensile test in Comparative Example 4, where (a) shows the appearance and (b) shows the cross section.
FIG. 32 is a chart showing the relation between stroke and force F in a cross tensile test in Comparative Example 5.
FIG. 33 shows optical images of the cross section of the nugget in the welded part ruptured in the cross tensile test in Comparative Example 5 where (a) shows the appearance and (b) shows the cross section.
FIG. 34 is a chart showing the relation between stroke and force F in the cross tensile test in Example 2 and Comparative Examples 4 and 5.
FIG. 35 is a chart showing the breaking loads in Example 2 and Comparative Examples 4 and 5.
FIG. 36 is a cross-sectional view schematically showing generally performed spot welding of steel plates.
FIG. 37 is a detailed view of a cross section of welded part produced by conventional spot welding.
FIG. 38 is a plan view of a sample used for a tensile test for examining the spot welding strength of high-tension steel plates, where (A) shows a lap joint sample, and (B) shows the cross joint sample.
FIG. 39 is a drawing schematically showing a rupture pattern in a cross tensile test of spot-welded part.
FIG. 40 provides drawings showing the heated state of steel plates in Patent Literature 3.

### Reference Signs List

- 1:: Welded structural member
- 2:: Steel plate
- 2B, 2C:: Ring-shaped region
- 3:: Spot-welded part
- 4:: Molten and solidified part
- 5:: Heat-affected zone
- 10:: Welding device
- 10A:: Circuit for welding
- 10B:: Welding part
- 12:: Gun arm
- 12A:: Top gun arm
- 12B:: Top gun arm
- 13:: Electrode support
- 14:: Electrode
- 15:: Floating inductance
- 16:: Low-frequency power supply
- 17: Capacitor
- 18:: High-frequency power supply
- 20:: Energization controller
- 21:: By-pass capacitor
- 22:: Commercial power supply
- 23:: Inductance for inhibiting high-frequency current
- 24:: Low-frequency power controller
- 26:: Welding transformer
- 28:: Oscillator
- 30:: Matching transformer
- 32:: High-frequency current
- 33:: Low-frequency current

### Description of Embodiments

Embodiments of the present invention will hereinafter be described in detail by referring to drawings.

### (Welding device)

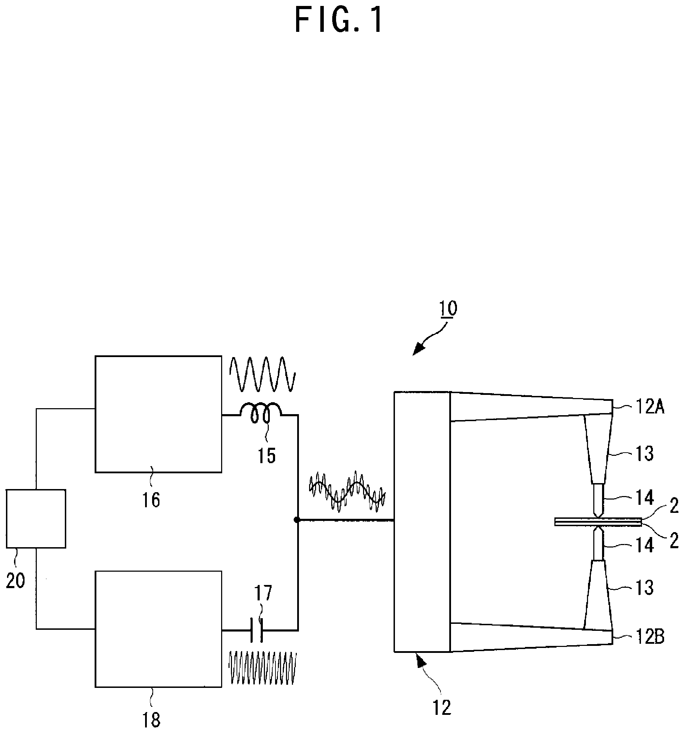

FIG. 1 is a drawing schematically showing a typical welding device 10 for spot-welding a welded structural member 1 according to an embodiment of the present invention. As shown in FIG. 1, the welding device 10 includes: an electrode arm 12; electrode supports 13, one of their respective ends being connected to a top part 12A and bottom part 12B of the electrode arm 12; a pair of electrodes 14 respectively connected to the other end of each electrode support 13; a welding power supply 16 connected to the electrode arm 12 via an inductance 15; a high-frequency power supply 18 connected to the electrode arm 12 via a capacitor 17; and an energization controller 20 for controlling each output from the welding power supply 16 and the high-frequency power supply 18.

The welding device 10 for metallic materials further includes: a fixed base for supporting the electrode arm 12; a driving mechanism for driving the electrode arm 12; a thrust mechanism for thrusting one of the electrodes 14 from the electrode support 13, etc. (none of them are shown). The thrust mechanism is used to pressurize steel plates 2, 2, which will become a welded structural member 1 to be described later.

The electrode arm 12 has the top arm 12A and the bottom arm 12B, which are respectively connected to the electrodes 14, 14 via each electrode support 13. The electrode arm 12 is also called a gun arm. Since the gun arm 12 shown is in a so-called C shape, it is also called C-type gun arm. In addition to the C-type gun arm 12, an X-type gun arm, etc. can be used for portable-type or robot-type welding devices. The electrode arm 12 of any type is applicable, but a case where the C-type gun arm 12 is used for welding will hereafter be described.

Each of the electrode pair 14, 14 faces each other via a gap, into which two steel plates 2, 2 are inserted. The electrodes 14 are made of copper for example, and in a shape of a circle, an ellipse, or a rod.

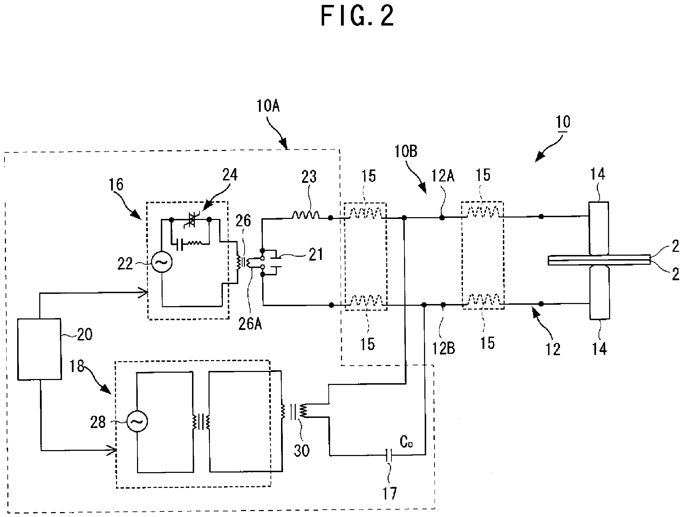

FIG. 2 is an electric circuit diagram of the welding device 10 shown in FIG. 1. As shown in FIG. 2, the electric circuit of the welding device 10 includes a circuit for welding 10A enclosed by a dotted line and a welding part 10B. The circuit for welding 10A includes: the power supply for welding 16; the high-frequency power supply 18; the inductance 15; the capacitor 17; and electrical circuits such as the energization controller 20 for controlling each output from the welding power supply 16 and the high-frequency power supply 18. The welding part 10B constitutes a circuit electrically connected to the circuit for welding 10A, and includes the gun arm 12, a pair of electrodes 14, 14 electrically connected to the gun arm 12, and steel plates 2, 2 sandwiched by these pair of electrodes 14, 14.

The welding power supply 16 is a low-frequency power supply, and includes: for example, a commercial power supply 22 whose output frequency is 50 Hz or 60 Hz; a low-frequency power supply controller 24 connected to one end of the commercial power supply 22; and a welding transformer 26 connected to the other end of the commercial power supply 22 and to the output end of the low-frequency power supply controller 24. Both ends of the secondary winding of the welding transformer 26 are respectively connected to the left end of the top arm 12A and the left end of the bottom arm 12B of the C-type gun arm. The low-frequency power supply controller 24 is made up mainly of a semiconductor device for power control such as a thyristor, and a gate drive circuit, and controls feeding of power from the commercial power supply 22 to the electrodes 14.

A bypass capacitor 21 is connected to the side of the C-type gun arm 12 of the welding transformer 26, namely to the secondary winding 26A, in parallel. The bypass capacitor 21 has a low capacitive impedance with respect to the frequency of the high-frequency power supply 18. Consequently, the high-frequency voltage from the high-frequency power supply 18 can minimize the voltage applied to the secondary winding 26A, thereby lowering the high-frequency inductive voltage to the primary side of the welding transformer 26. Also, an inductance 23 for inhibiting high-frequency current is connected to the secondary winding 26A of the welding transformer 26 in series. The inductance 23 for inhibiting high-frequency current rarely affects the low-frequency current but has a function of preventing current from the high-frequency power supply 18 from flowing into the low-frequency power supply 16.

The high-frequency power supply 18 includes an oscillator 28 and a matching transformer 30 connected to the output end of the oscillator 28. An end of the matching transformer 30 is connected to the top arm 12A of the C-type gun arm 12. The other end of the matching transformer 30 is connected to the bottom arm 12B of the C-type gun arm 12 via the capacitor 17. This capacitor 17 can also be used as a matching capacitor in a series resonance circuit, which will be described later. The capacitance value of the capacitor 17 depends on the oscillating frequency of the oscillator 28 and the floating inductance 15 of the C-type gun arm 12. The oscillator 28 includes an inverter using various transistors, and controls the power fed from the high-frequency power supply 18 to the electrodes 14.

As shown in FIG. 2, the path from the C-type gun arm 12, which is connected to the secondary winding of the welding transformer 26, to the electrode 14 has the inductance 15. As the inductance, a floating inductance formed by the C-type gun arm 12 can be used. When the capacitor 17 is also used as a matching capacitor, a series resonance circuit may be structured by this matching capacitor 17 and the inductance 15.

### (Welding method)

A welding method according to the present invention will hereinafter be described
(1) Pressure is applied to steel plates 2 first.
(2) Oxidized scale having attached to the surface of the steel plates 2 is removed by a low-frequency first energization. The low-frequency first energization can decrease the amount of generated sputter.
(3)A low-frequency second energization is performed as a major welding. The nugget grows and a navel is generated together with buckling.
(4)A cooling period is provided.
(5)A high-frequency third energization is performed to temper the welded part of the steel plates 2.
(6) Pressurization is terminated to detach the electrodes 14 from the steel plates 2. In other words, pressure that has been applied to the steel plates 2 is removed.

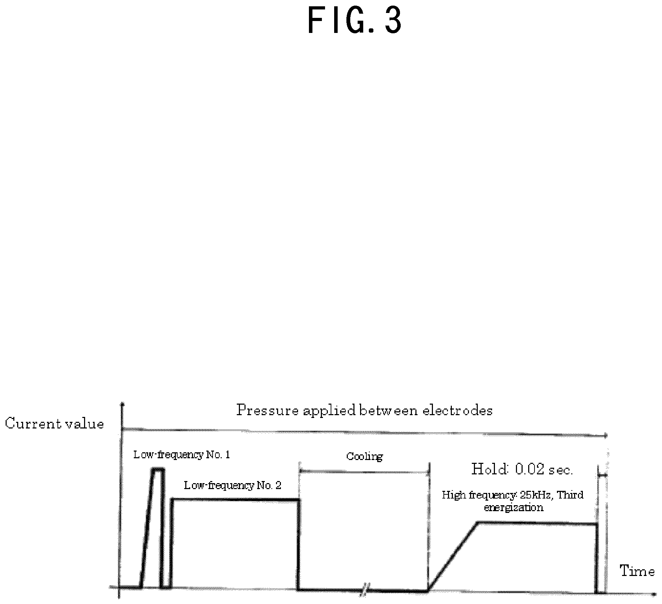

FIG. 3 is a chart showing an example of heating waveform. As shown in FIG. 3, a first energization from the low-frequency power supply 16 is performed ("Low-frequency No. 1"), the first energization is terminated, and then after a predetermined period of time has elapsed, the second energization from the low-frequency power supply 16 ("Low-frequency No. 2") is performed. After this second energization, the cooling period is provided. After the predetermined cooling period, the third energization from the high-frequency power supply 18 shown in FIG. 1 is performed. After the third energization is completed, the steel plates 2 are cooled.

### (Current distribution generated on the steel plates)

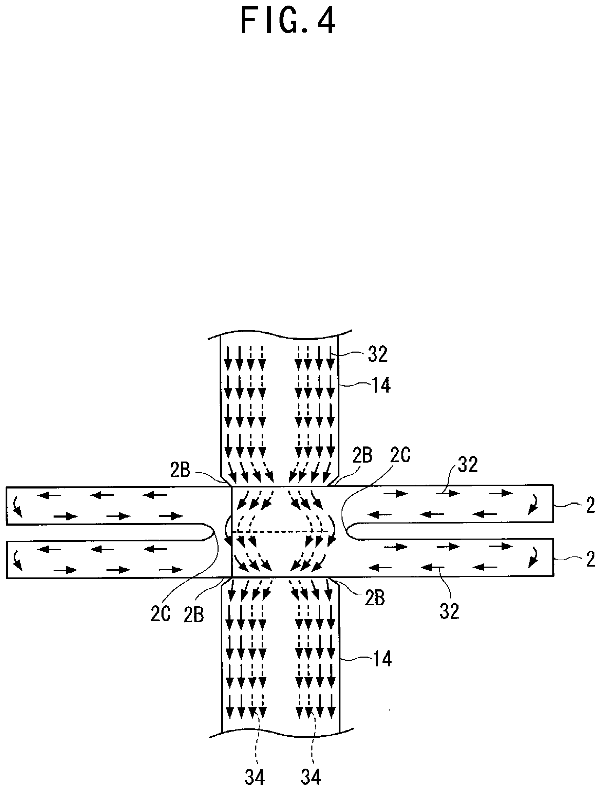

FIG. 4 is a cross-sectional view schematically showing the current distribution generated on the steel plates 2 exhibited when electric power is simultaneously applied from a low-frequency power supply 16 and a high-frequency power supply 18 to two overlapped steel plates 2. In FIG. 4, the solid line shows high-frequency current 32 from the high-frequency power supply 18, and the dotted line shows the low-frequency current 34 from the low-frequency power supply 16. The electrodes 14 are made of copper, the diameter of the tip of these electrodes is 6 mm, and the frequency of the low-frequency power supply 16 is 50 Hz. The thickness of one steel plate 2 is 1.2 mm for example, and the frequency of the high-frequency power supply 18 is 25 kHz for example. As shown in FIG. 4, since the low-frequency current 34 flows within the entire electrodes 14, 14, the steel plates 2 are energized approximately by the width of the cross section of the nugget diameter. Unless otherwise specified, the names described in FIG. 40 are used for the heated region in the part welded by low-frequency and high-frequency power supplies 16, 18.

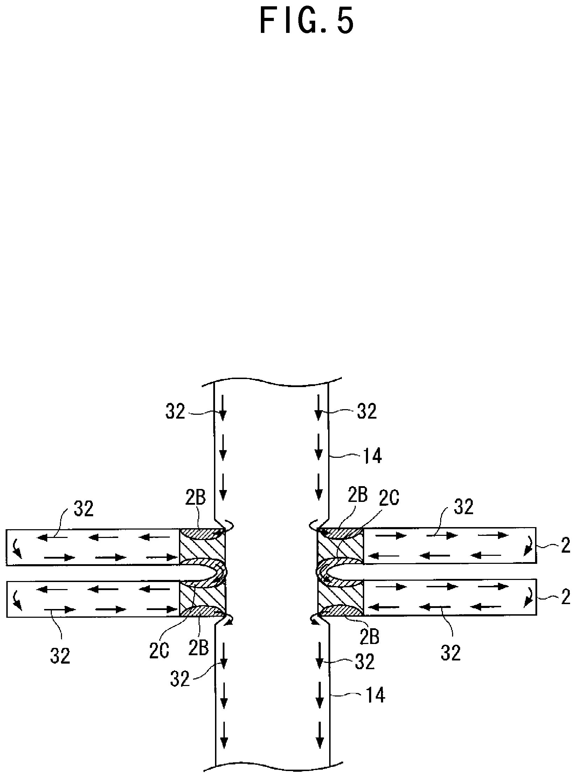

FIG. 5 is a cross-sectional view showing the state of two overlapped steel plates 2 heated by the high-frequency current 32. As shown in FIG. 5, ring-shaped proximity regions 2B and an end 2C of the connecting faces of the steel plates 2 are heated. This end 2C is also in a shape of a ring as in the case of the ring-shaped proximity regions 2B formed on the surface of the steel plates 2. The two proximity regions 2B and the end 2C of the connecting faces of the steel plates 2 are the portions where high-frequency current 32 is fed intensely. Consequently, in the overlapped steel plates 2, the temperature of two proximity regions 2B and that of the end 2C of the connecting faces of the steel plates 2 (three regions) become highest by the high-frequency current 32. When the end 2C of the connecting faces of the steel plates 2 is heated by the high-frequency current 32, a solid-state bonding is formed on the boundary of the steel plates 2 in the heat-affected zone 5, instead of conventionally formed corona bond part (shown as 57 in FIG. 37).

### (Skin depth)

The skin depth of the steel plates 2 is an approximate depth where current is fed when low-frequency or high-frequency power is applied to the steel plates 2. The skin depth of the steel plates 2 varies in proportion to the frequency minus the half power i.e. f^{-1/2}. Consequently, the lower the frequency, the thicker the skin depth, and higher the frequency, the thinner the skin depth, of the steel plates 2, provided that the material is the same. Since the power used for welding is generally 50 Hz or 60 Hz, the current is fed through the entire electrodes 14 if the diameter of the tip of the electrodes 14 is approximately 6 mm.

Meanwhile, when the surface of the steel plates 2 only is to be heated, the skin depth from the surface can be set to be a predetermined value by adjusting the frequency of the high-frequency power supply 18. Therefore, to select a heating width of the ring-shaped proximity regions in the outer periphery to be heated by the high-frequency power supply 18, it is only necessary to set the frequency of the high-frequency power supply 18. In other words, by changing the frequency of the high-frequency current 32, the heating width of the outer peripheral region can be changed, and by having the ring-shaped proximity regions 2B and the end 2C undergo heating process such as tempering, the ring-shaped proximity regions 2B and the end 2C can be softened.

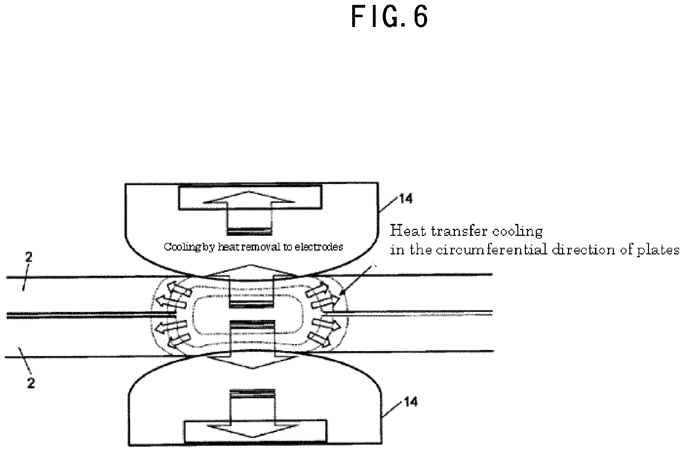

FIG. 6 is a drawing schematically describing the cooling of the steel plates 2 in the cooling period. As shown in FIG. 6, the cooling of the steel plates 2 progresses in two stages: the heat removal cooling toward the electrodes 14 and the heat transfer cooling toward the circumference of the area where the electrodes 14 contact the steel plates 2. In this case, since the electrodes 14 are cooled by water, the amount of heat removed by the removal cooling toward the electrodes 14 is large, and the cooling progresses from the center of the nugget toward the end. The longer the cooling period, the larger the cooled area. With the progress of cooling, the nugget is tempered, and the texture changes from austenite structure to hard and brittle martensite structure.

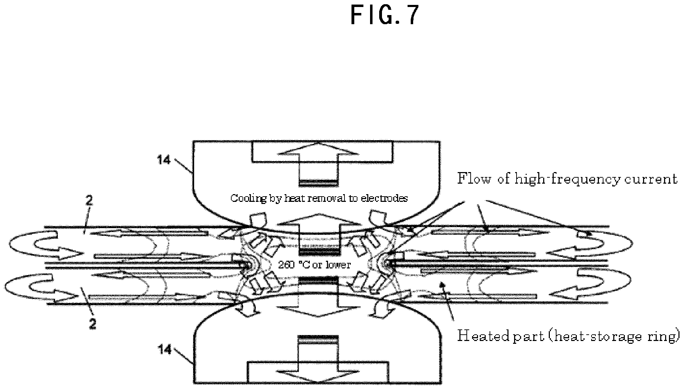

FIG. 7 is a drawing schematically describing the heating of the steel plates 2 in the high-frequency third energization period. As shown in FIG. 7, the high-frequency energization creates a wide heat storage ring in the outer periphery of the nugget. Although tempering by cooling of the nugget continues in the high-frequency third energization period, the progress of cooling toward outside is attenuated significantly by the heat of the heat storage ring.

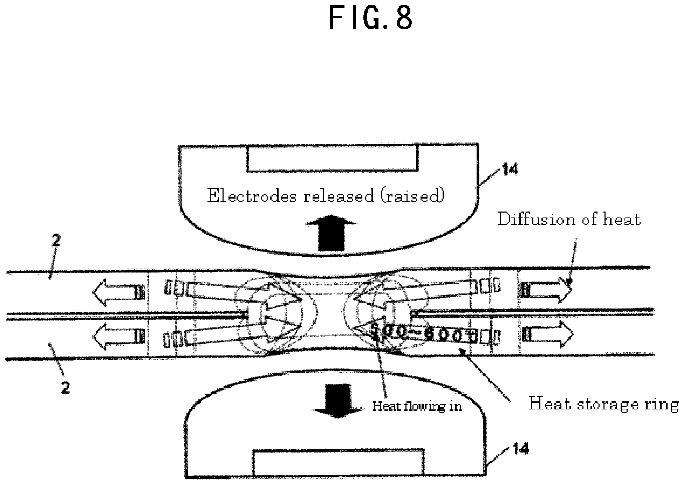

FIG. 8 is a drawing schematically describing tempering after high-frequency energization. As shown in FIG. 8, after the high-frequency third energization is completed, the electrodes 14 are raised to release the pressure having been applied to the steel plates 2. Once the pressure from the electrodes 14 is released, heat starts to flow from the heat storage ring toward the low-temperature region around the center of the nugget, allowing the entire region having contacted the electrodes 14 to have a uniform temperature. Thanks to this heat that has flowed in, the nugget is tempered, and the texture changes into highly ductile tempered martensite structure. In other words, in the nugget, the welded part in a quenched state is tempered by the heat having flowed from the heat storage ring. Unlike low-frequency waves that pass through the center of the welded part, the energizing path of high-frequency waves is mainly created on the surface of the steel plates 2 on the outer periphery of the welded part by the skin effect, which is a feature of high-frequency waves, thereby generating ring-shaped heat storage region (called a storage ring) at a part where flux density of high-frequency current 32 increases.

In order for the welded part to be tempered by the high-frequency energization and change into highly ductile tempered martensite structure, it is necessary for the spot-welded part 3 to be cooled to a temperature lower than the martensite transformation finish (Mf) point (called Mf temperature). The temperatures lower than the Mf point vary depending on the composition of the steel plates 2. For example, the Mf temperature of the steel plates 2 containing carbon (C) by 0.26% is approximately 300°C.

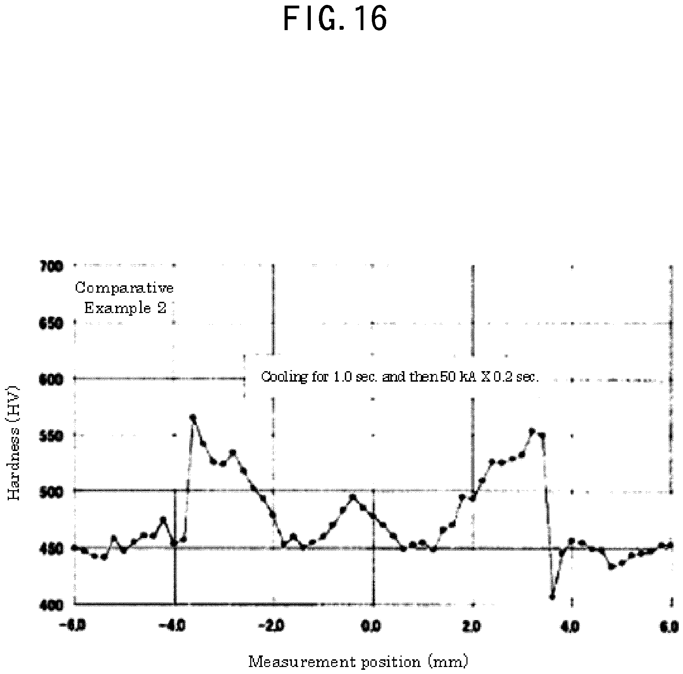

When the part whose temperature has decreased to lower than the Mf point is heated again, the tempered martensite structure is created, allowing ductility to improve. According to the present invention, a uniform hardness distribution without angles is obtained. When the tempering is started in a state where the temperature of the entire welded region has not reached 300°C, which is the Mf temperature, namely where the incompletely quenched part is included, the hardness distribution on the cross section of the welded part becomes a shape of M, the high-hardness regions generated between the steel plates 2 (base material) and the heat-affected zone 5 remaining as angles, as shown in Comparative Example in FIG. 16 to be described later. Angles, which causes the rupture pattern deficiency and the insufficient rupture strength to occur, are not desirable.

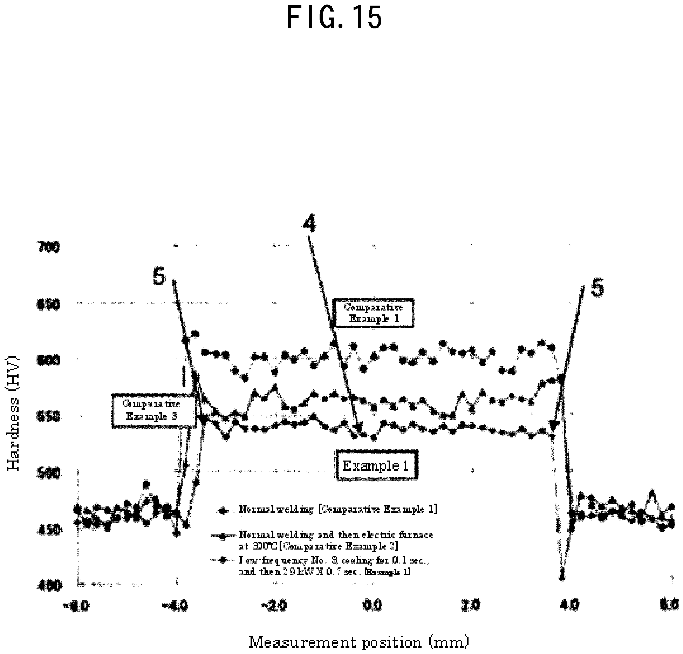

Provided that the entire region of the spot-welded part 3 of the present invention is cooled to 300°C or lower, the hardness distribution becomes mostly uniform, as shown in Example 1 in FIG. 15 to be described later, without generation of angles exhibited by the part between the steel plates 2 (base material) and the heat-affected zone 5. The heat-affected zone 5 and the molten and solidified part 5 thus turn to highly ductile tempered martensite structure. In this case, by tempering the welded part by adding high-frequency energization heating to the welding by low-frequency energization only, the tensile break strength in a cross tensile test mostly doubles. For example, if the tensile break strength by low-frequency welding falls within a range from 3.5 kN to 4 kN, the tensile break strength by the welding of the present invention falls within a range from 7 kN to 8 kN or higher.

The basic form of hardness distribution is created by cooling time (cooling), and the increase and the decrease in the hardness within the welded part can be adjusted by the amount of high-frequency electric power (heat) applied. The structure of the part whose temperature has decreased by cooling to the Mf point (300°C) or lower changes from the quenched martensite structure to the tempered martensite structure.

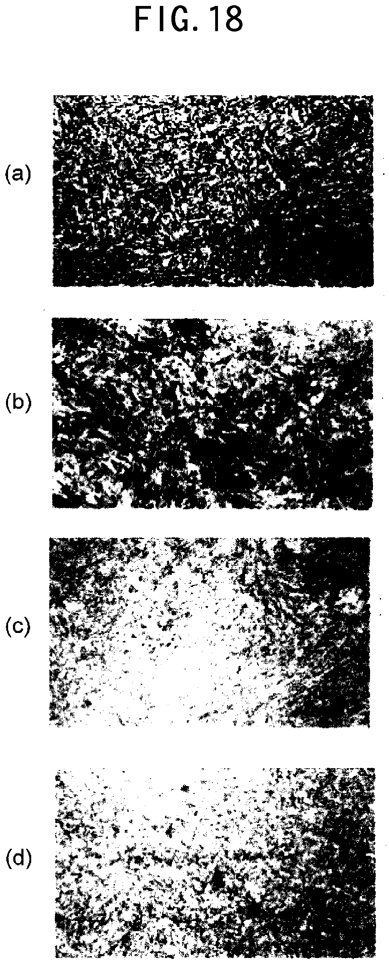

As shown in FIG. 18 (a) to be described later, after the spot welding, the spot-welded part 3 is in a bamboo-grass-like structure having a clear outline. When the high-frequency power increases, the bamboo-grass-like tempered structure becomes rough. The shades and roughness change depending on the heating time and the magnitude of output. If the tempering is performed after long cooling, a fine structure can be created, but in the spot welding, the bamboo-grass-like structure is produced due to the limitation in time.

For example, in the hardness distribution of the spot-welded part 3, assuming that the optimum hardness of angled part falls within a range from 550 to 560 (HV), the relation between the cooling time and the high-frequency power of the structure is as follows:
(a) The higher the output, the rougher the structure.
(b) The higher the output and longer the application time, the rougher the structure and darker the color because of the deposition of carbide.
(c) The longer the time, the darker the color because of the deposition of carbide.

Meanwhile, the structure created only by the conventional low-frequency energization, no clear outline is created but shading only appears, as shown in FIG. 18 (b), which will be described later, and depending on conditions, a bamboo-grass-like structure or a lamelliform structure is formed. When tempering is incomplete, no clear outline is created, and a spongiform structure like alga-like seaweed appears and also its shape and density are not uniform.

The part whose temperature does not decrease to the Mf point or lower by cooling remains in an angular shape in the hardness distribution as a transitive part from austenite structure. Its structure is hard and brittle.

According to the present invention, the cooling time, the magnitude of high-frequency power, and the application time of high-frequency power can be determined by comparing the tensile break strength, the breaking mode, and the structure. The above is provided that the plate thickness is 1.2 mm (t=1.2 mm).

The example where steel plates 2, 2 are spot welded was described above. However, any shapes can be selected in addition to plates. Also, the case where two steel plates 2 are spot welded was described, but three or more plates may be welded.

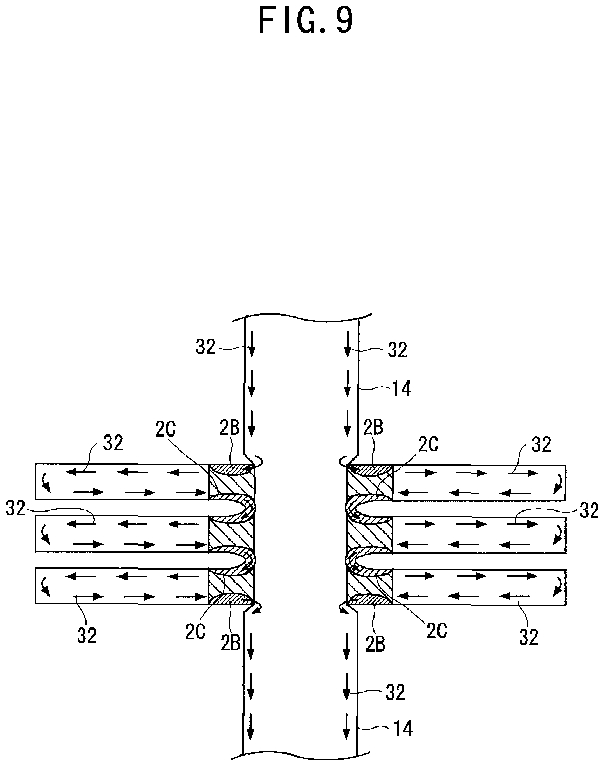

FIG. 9 is a cross-sectional view showing the heated state of three overlapped steel plates by high-frequency current 32. As shown in FIG. 9, when three steel plates 2 are placed on top of one another, the four ring-shaped regions 2B, 2C, namely two ring-shaped proximity regions 2B and two ends 2C of the connecting faces of the steel plates 2, are heated.

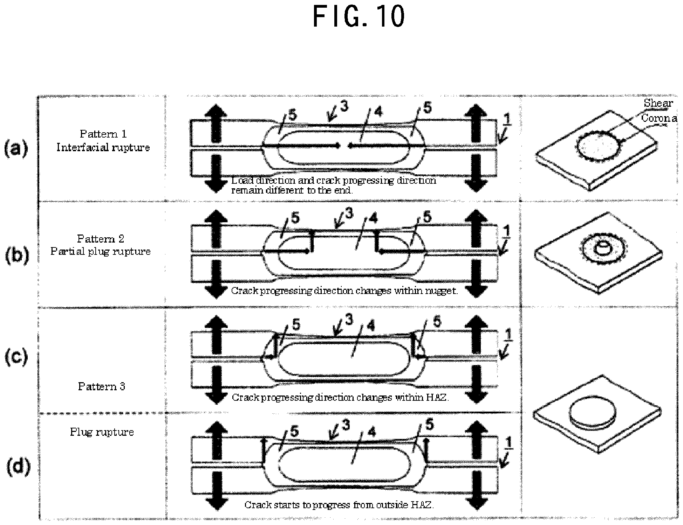

FIG. 10 shows the JIS classification of rupture patterns that appear when the spot-welded part 3 of welded structural member 1 is made to undergo the cross tensile test, where (a) shows the interfacial rupture, (b) shows the partial plug rupture, and (c) and (d) show the plug ruptures.

In the interfacial rupture shown in FIG. 10 (a), the loading direction of the cross tensile test and the progressing direction of cracks differ to the last, meaning that the rupture strength is low. The partial plug rupture shown in FIG. 10 (b) is a rupture pattern where the progressing direction of racks changes within the nugget, hence the rupture strength is low. The plug rupture shown FIG. 10 (c) is a rupture pattern where the progressing direction of cracks changes within the heat-affected zone 5, hence the rupture strength is high. The plug rupture shown in FIG. 10 (d) is a so-called base material rupture where cracks start to appear from the outside of the heat-affected zone 5, hence the rupture strength is high.

With the welded structural member 1 in the Examples shown below, the rupture patterns in the cross tensile test are represented by the JIS classification in FIG. 10. When the spot welding causes the plug rupture, the spot welding is judged to have been performed successfully. Unless otherwise specified, the names used for FIG. 39 are used for each name of spot-welded part 3.

The present invention will hereinafter be described further in detail by referring to Examples.

### [Example 1]

### (Spot welding of two steel plates)

An example where two steel plates 2 are spot-welded by the welding device 10 will be described in detail.

Two steel plates 2 were spot-welded. Conditions such as details of the steel plates 2, low-frequency power supply 16, and the high-frequency power supply 18 used were:
Steel plates 2: Thickness; 1.2 mm, size; 50 mm × 150 mm
Low-frequency power supply 16: 50 Hz, Electrodes 14 were made of copper, the diameter of the tip of each electrode 14 was 6 mm, the radius of curvature (R) of the tip was 40 mm, and the power capacity was 50 kVA.
Energization time by the low-frequency power supply 16: 0.34 sec
High-frequency power supply 18: 18.25 kHz, 29 kW
Energization time by the high-frequency power supply 18: 0.7 sec.

As the composition of the steel plates 2 (percentage by mass), carbon (C) was contained by 0.26 %, for example, as a component other than iron.

The application of power from the low-frequency and the high-frequency power supplies 16, 18 in Example 1 will be described by referring to FIG. 3.

First, the welding was performed by applying power from the low-frequency power supply 16. As shown in FIG. 3, the power from the low-frequency power supply 16 was applied in two stages: the first energization and the second energization. The rise time of a fist current by the first energization was defined as one cycle (0.02 sec.), and the first energization where the maximum value of the first current is maintained was defined as one cycle (0.02 sec.) The maximum value of the first current was approximately 9 kA. After the first energization, the cooling was performed for one cycle (0.02 sec.) and then the second energization was performed. The energization was performed for 14 cycles with the maximum value of the second current by the second energization maintained at 7.2 kA. The two-stage energization by the low-frequency power supply 16 was 17 cycles including the cooling, etc. Since one cycle was 0.02 sec., the welding time was 0.34 sec. After the second energization from the low-frequency power supply 16 was completed, the cooling was performed for one sec. Then the power from the high-frequency power supply 18 was applied at 29 kW for 0.7 sec. When 0.02 sec. has elapsed since the start of application of power from the high-frequency power supply 18, the pressurization by the electrodes 14 was terminated.

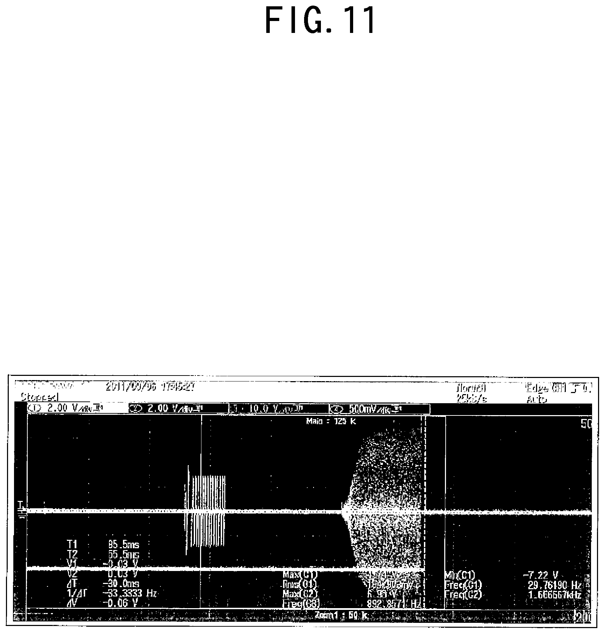

FIG. 11 is a waveform example of the power applied from the low-frequency and the high-frequency power supplies 16, 18 by an oscilloscope.

In Example 1, the cooling period shown in FIG. 3 was set at one sec., and the third energization by the 25-kHz high-frequency power was performed at 29 kW for 0.7 sec.

### (Comparative Example 1)

As Comparative Example 1 with respect to Example 1, two steel plates 2 were spot-welded by energization by the low-frequency power supply 16 only. In other words, the general spot welding was performed. The same steel plates 2 and the electrodes 14 used for Example 1 were used.

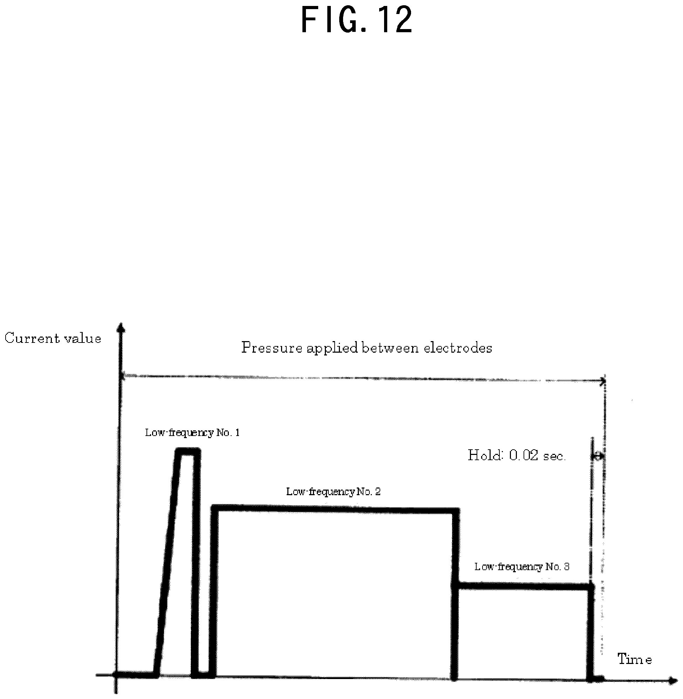

FIG. 12 is a chart schematically showing the application of the electric power by the low-frequency power supply 16 in Comparative Example 1. The energization pattern is shown below:
Rise of a first current by a first energization: 1 cycle (0.02) sec.
First energization (represented as "Low-frequency No. 1" in the FIG.): 9 kA, 1 cycle (0.02 sec.)
Cooling: 1 cycle (0.02 sec.)
Second energization (represented as "Low-frequency No. 2" in the FIG.): 5.5 kA, 6 kA, 7.2 kA, 14 cycles (0.28 sec.)
Third energization (represented as "Low-frequency No. 3" in the FIG.): 3.6 kA, 5 cycles (0.1 sec.)

The diameter of the nugget is determined by the current value of the second energization. The diameter of the nugget was measured by observing the cross section of the part welded by the general spot welding. The diameters of the nugget were approximately 4.4 mm, 4.9 mm, 5.4 mm, and 6 mm when the current of the second energization were approximately 5.5 kA, 6 kA, 6.5 kA, and 7.2 kA respectively.

### (Comparative Example 2)

The spot welding was performed in Comparative Example 2 by inserting a cooling period of one sec. between the second and the third energization in Comparative Example 1. Heating conditions other than the insertion of the cooling period, such as the first to the third energization, were the same as those in Comparative Example 1.

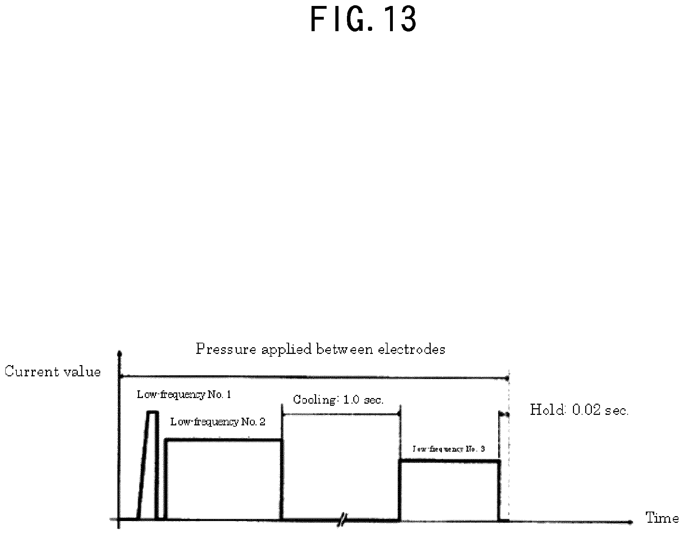

FIG. 13 is a chart showing the energization pattern in Comparative Example 2. The energization pattern is shown below:
Rise of the first current by the low-frequency first energization: 1 cycle (0.02 sec.)
Low-frequency first energization: 9.0 kA, 1 cycle (0.02 sec.)
Low-frequency cooling: 1 cycle (0.02 sec.)
Low-frequency second energization: 7.2 kA, 14 cycles (0.28 sec.)
Cooling period: 50 cycles (1 sec.)
Low-frequency third energization: 6.0 kA, 10 cycles (0.2 sec.)
Hold time: 1 cycle (0.02 sec.)

### (Comparative Example 3)

As Comparative Example 3 with respect to Example 1, the welding was performed by the low-frequency power supply 16 only in the energization pattern in Comparative Example 1, and the welded steel plates were made to undergo heat treatment in an electric furnace. The heat treatment was performed at 300°C for 30 minutes.

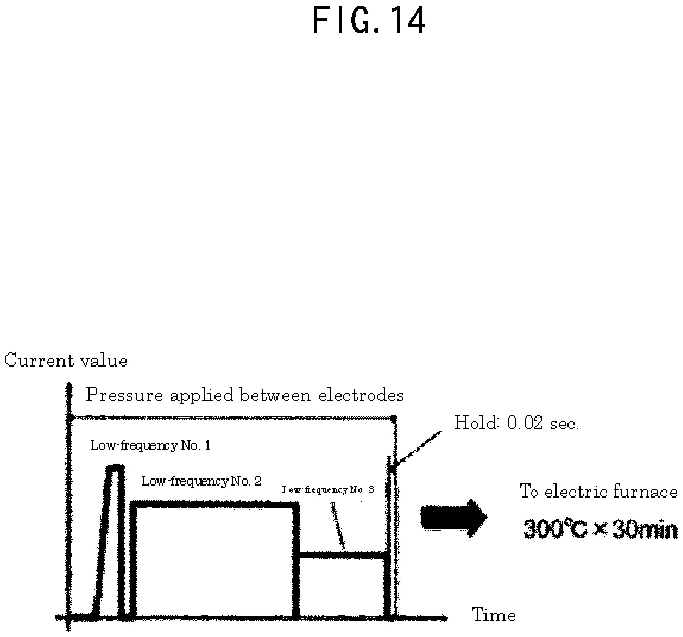

FIG. 14 is a chart schematically describing the application of power by the low-frequency power supply 16 and the heat treatment in the electric furnace in Comparative Example 3. The energization pattern is shown below:

### Comparative Example 3:

Rise of a first current by first energization: 1 cycle (0.02 sec.)
First energization: 9 kA, 1 cycle (0.02 sec.)
Cooling: 1 cycle (0.02 sec.)
Second energization: 7.2 kA, 14 cycles (0.28 sec.)
Third energization: 3.6 kA, 5 cycles (0.1 sec.)

FIG. 15 is a chart showing an example of hardness distribution on the cross section at mostly the center of spot-welded part 3 of spot-welded members 1 produced in Example 1 and Comparative Examples 1 and 3. The horizontal axis represents the positions of the spot-welded part 3 in a direction along the overlapped part of the steel plates 2, 2, corresponding to the cross section of the spot-welded part 3. The vertical axis represents Vickers hardness (HV). The Vickers hardness (HV) of the steel plates (base material) before spot welding was approximately 465 HV. The low-frequency second energization in Example 1 and Comparative Examples 1 and 3 shown in FIG. 15 was performed at a current of 7.2 kA for 14 cycles. The diameter of the nugget was 6 mm.

As shown in FIG. 15, in the case of Example 1, the hardness distribution on the left side of the measurement position, namely the outer-left side of the heat-affected zone 5, fell within a range from 455 to 470 HV, that on the left side of the heat-affected zone 5 from 460 to 550 HV, that of the molten and solidified part 4 from 530 to 550 HV, that on the right side of the heat-affected zone 5 from 530 to 410 HV, and that on the outer-right side of the heat-affected zone 5 from 455 to 460 HV. The hardness of the heat-affected zone 5 and the molten and solidified part 4 in Example 1 was found to be mostly uniform, falling within the range from 530 to 550 HV, whereas the hardness of the base material was 465 HV.

As shown in FIG. 15, in the case of Comparative Example 1, the hardness distribution on the left side of the measurement position, namely on the outer-left side and outer-right side of the heat-affected zone 5, exhibits an angular shape with a peak at approximately 610 HV, whereas the heat-affected zone 5 and the molten and solidified part 4 exhibit uniform hardness, falling within a range from 580 to 620 HV.

The hardness distribution of the spot-welded part 3 in Example 1 and that in Comparative Example 1 are compared as follows. Example 1 does not exhibit an angle such as the one generated in the outermost side of the heat-affected zone 5 in Comparative Example 1, showing generally low hardness. The hardness at the center of the molten and solidified part 4 fell within a range approximately from 530 to 550 HV, which is 85 HV higher than the hardness of the base material of 465 HV.

The spot-welded part 3 in Example 1 exhibited mostly the same hardness distribution as that in Comparative Example 3, where the tempering was performed in the electric furnace as heat treatment after the low-frequency power was applied, although the hardness at the center of the molten and solidified part 4 was slightly lower.

FIG. 16 is a chart showing an example of hardness distribution on the cross section at approximately the center of the spot-welded part 3 of the spot-welded member 1 produced in Comparative Example 2. The vertical axis represents Vickers hardness (HV). The Vickers hardness (HV) of the steel plates 2 (base material) before spot welding was approximately 465 HV. The hardness on the cross section at the center in Comparative Example 2 exhibited M-shaped distribution with increased hardness at the angular part and decreased hardness in the nugget.

### (Observation of the structure of cross section at the edge of the nugget)

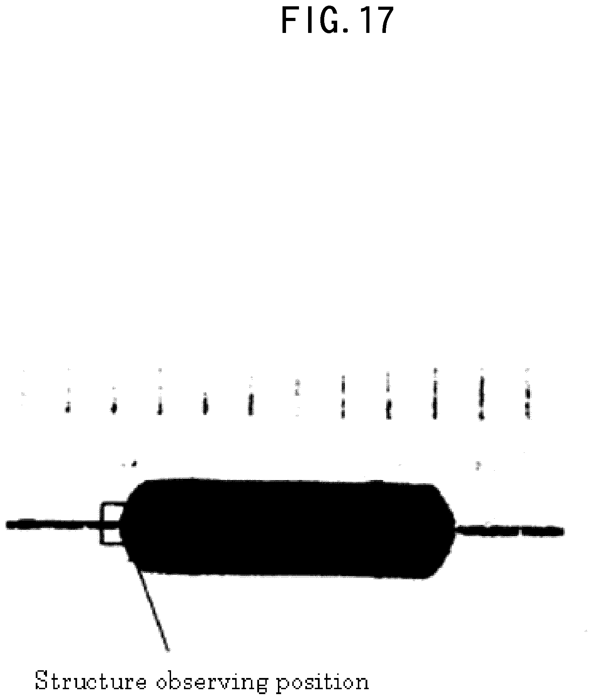

FIG. 17 is a cross-sectional view showing a region where the structure of the steel plates 2 was observed. FIG. 18 (a) to (d) respectively provides optical images showing the structure of the cross section at the edge of the nugget in Example 1 and Comparative Examples 1 to 3. The magnification of the optical images is 1000. The metallic structure on the surface of the welded part of the steel plates 2 was planarized by electrolytic polishing method disclosed in Patent Literature 4 and Non-patent Literature 2.

As shown in FIG. 18 (a), the structure of the cross section at the edge of the nugget in Example 1 is the tempered martensite structure. As shown in FIG. 18 (b), the structure of the cross section at the edge of the nugget in Comparative Example 1 is the quenched martensite structure. As shown in FIG. 18 (c), the structure of the cross section at the edge of the nugget in Comparative Example 2 is similar to the tempered martensite structure in Example 1. As shown in FIG. 18 (d), the structure of the cross section at the edge of the nugget in Comparative Example 3 is the tempered martensite structure.

Welded samples in Example 1 and Comparative Examples 2 and 3 were made to undergo the cross tensile test to find their breaking force F (kN).

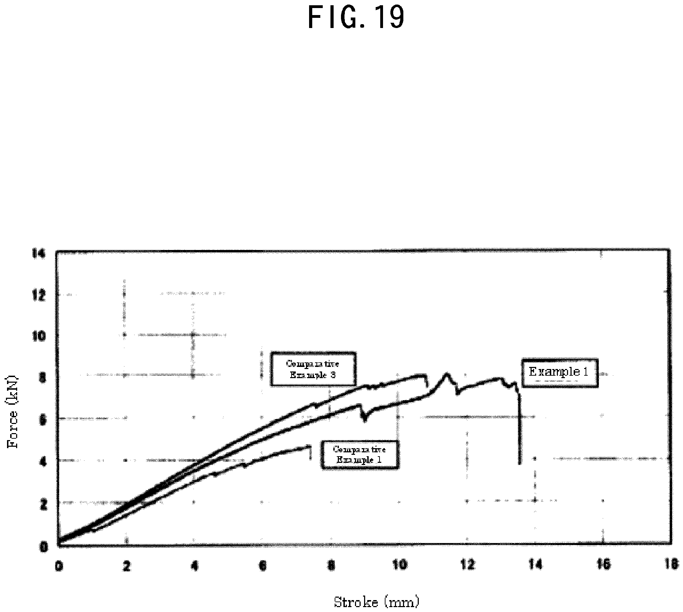

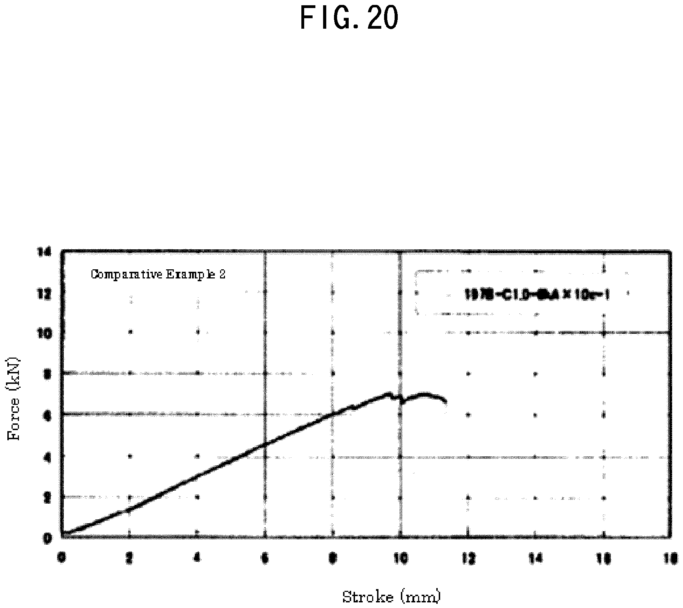

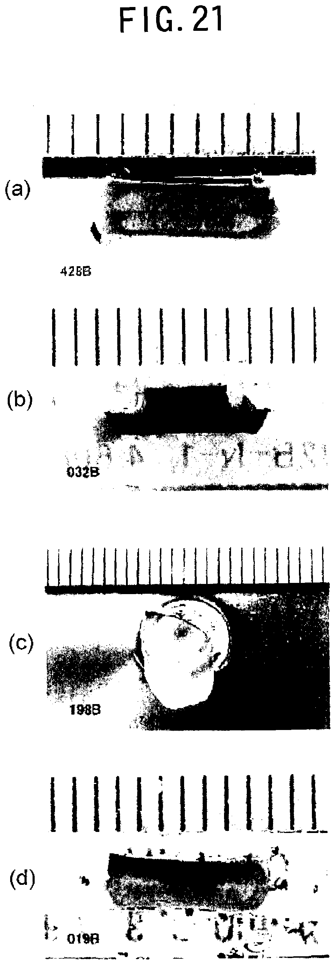

FIG. 19 is a chart showing the relation between the tension, namely stroke, and the force F in the cross tensile test in Example 1 and Comparative Examples 1 and 3. FIG. 20 is a chart showing the relation between the stroke and the force F in the cross tensile test in Comparative Example 2. FIG. 21 provides optical images showing the cross section of the nugget in the welded part having ruptured in the cross tensile test, where (a) shows that of Example 1, and (b), (c) and (d) respectively show those of Comparative Examples 1, 2, and 3.

As shown in FIG. 19, the tensile stroke in the cross tensile test was found to increase in the order from Comparative Example 1 to Comparative Example 3 and then to Example 1. As shown in FIG. 20, the stroke in the cross tensile test in Comparative Example 2 is found to exhibit similar characteristics as Comparative Example 3.

From the result of the above cross tensile test, the strength of the welded sample in Example 1 was found to be high.

The number of samples of welded structural member 1 in Example 1 is five.

When the diameter of the nugget was 6 mm, the breaking force of each welded structural member 1 was 8.39 kN, 8.02 kN, 7.90 kN, 7.26 kN, and 8.64 kN respectively. The average value of breaking force F_{AV} was 8.04 kN, the range R of difference between the maximum and the minimum values of breaking force was 1.38 kN, the standard deviation (σ) was 0.47 kN, and the ratio of average value of breaking force F_{AV}to the diameter of the nugget (F_{AV}/ND) was 1.34 kN/mm. All of the welded structural member samples in Example 1 exhibited plug rupture as shown in FIG. 21 (a). Table 1 summarizes measurement values obtained by the cross tensile test.

**[Table 1]**

| | | Ex. 1 | | Com. Ex. 1 | | Com. Ex. 2 | | Com. Ex. 3 | |
|---|---|---|---|---|---|---|---|---|---|
| Welding condition | | Normal welding + Cooling + High-frequency | | Normal welding | | Normal welding + Cooling + Low-frequency | | Normal welding + Tempering in electric furnace | |
| Assumed nugget diameter ND | | Approx. 6.0 mm | | Approx. 6.0 mm | | Approx. 6.0 mm | | Approx. 6.0 mm | |
| Breaking force F (kN) and breaking mode | 1^{st} time | 8.39 kN | ○ | 4.60 kN | × | 7.00 kN | × | 7.75 kN | ○ |
| | 2^{nd} time | 8.02 kN | ○ | 4.20 kN | × | 6.79 kN | × | 7.60 kN | ○ |
| | 3^{rd} time | 7.90 kN | ○ | 4.50 kN | × | 7.46 kN | × | 7.95 kN | ○ |
| | 4^{th} time | 7.26 kN | ○ | 4.59 kN | × | 6.96 kN | × | 8.15 kN | ○ |
| | 5^{th} time | 8.64 kN | ○ | 4.63 kN | × | 7.59 kN | × | 8.11 kN | ○ |
| Favg (kN) | | 8.04 kN | | 4.45 kN | | 7.16 kN | | 7.91 kN | |
| Range R | | 1.38 | | 0.40 | | 0.80 | | 0.55 | |
| Standard deviation σ | | 0.47 | | 0.15 | | 0.31 | | 0.21 | |
| Favg/ND (kN.mm) | | 1.34 | | 0.74 | | 1.21 | | 1.30 | |

| | | | | | | | | | |
|---|---|---|---|---|---|---|---|---|---|
| Breaking mode: O: Plug rupture or equivalent ×: Interfacial rupture, Partial plug rupture | | | | | | | | | |

The welding samples in Comparative Example 1 were subjected to the cross tensile test to find their breaking force F (kN). The number of samples in Comparative Example 1 was five.

When the nugget diameter was 6 mm, the breaking force of each welded structural member 1 was 4.6 kN, 4.20 kN, 4.50 kN, 4.59 kN, and 4.36 kN respectively. The average value of breaking force F_{AV} was 4.45 kN, the range R of the difference between the maximum and the minimum values of breaking force was 0.40 kN, the standard deviation (σ) was 0.15 kN, and the ratio of average value of breaking force F_{AV} to the diameter of the nugget (F_{AV}/ND) was 0.74 kN/mm. As shown in FIG. 21 (b), the rupture of each welded structural member in Comparative Example 1 was the interfacial rupture or the partial plug rupture.

The welding samples in Comparative Example 2 were subjected to the cross tensile test to find their breaking force F (kN). The number of samples in Comparative Example 2 was five.

When the nugget diameter was 6 mm, the breaking force of each welded structural member was 7.00 kN, 6.79 kN, 7.46 kN, 6.96 kN, and 7.59 kN respectively. The average value of breaking force F_{AV} was 7.16 kN, the range R of the difference between the maximum and the minimum values of breaking force was 0.80 kN, the standard deviation (σ) was 0.31 kN, and the ratio of average value of breaking force F_{AV} to the diameter of the nugget (F_{AV}/ND) was 1.21 kN/mm. As shown in FIG. 21 (c), the rupture of each welded structural member in Comparative Example 2 was the partial plug rupture.

In Comparative Example 2, samples were welded by providing a cooling period between the second and the third energization by the low-frequency power in Comparative Example 1. The above results show that the breaking force F in Comparative Example 2 exhibited improved the breaking force F in the cross tensile test compared to Comparative Example 1. Regarding the breaking mode, the interfacial rupture, which occurred in Comparative Example 1, did not occur but the partial plug rupture occurred. However, the complete plug rupture did not occur unlike Example 1 and Comparative Example 3, which will be described later.

The welding samples in Comparative Example 3 were subjected to the cross tensile test to find their breaking fore F (kN). The number of samples in Comparative Example 3 was five.

When the nugget diameter was 6 mm, the breaking force of each welded structural member was 7.75 kN, 7.60 kN, 7.95 kN, 8.15 kN, and 8.11 kN respectively. The average value of breaking force F_{AV} was 7.91 kN, the range R of the difference between the maximum and the minimum values of breaking force was 0.55 kN, the standard deviation (σ) was 0.21 kN, and the ratio of average value of breaking force F_{AV} to the diameter of the nugget (F_{AV}/ND) was 1.32 kN/mm. As shown in FIG. 21 (d), the rupture of each welded structural member in Comparative Example 3 was the plug rupture.

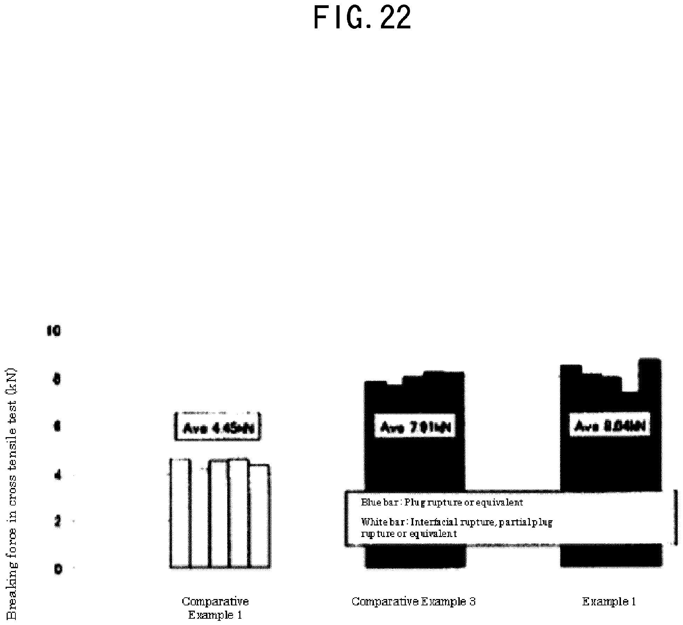

FIG. 22 is a chart showing the breaking force of the spot-welded members 1 produced in Example 1 and Comparative Examples 1 and 3. The vertical axis in FIG. 22 represents breaking force (kN). As shown in FIG. 22, the average breaking force in Example 1 and Comparative Examples 1 and 3 was 8.04 kN, 4.45 kN, and 7.91 kN respectively. The results of the cross tensile tests show that the breaking force of the welded material in Example 1 is twice as high as that of the material in Comparative Example 1, and has similar strength as the breaking force of the material in Comparative Example 3. Furthermore, the breaking mode proven by the cross tensile test in Example 1 was plug rupture (FIG. 10 (c) and (d)) just in the case of Comparative Example 3. In other words, the breaking mode in Example 1 has also improved compared to those of Comparative Examples 1 and 2, which were the interfacial rupture or the partial plug rupture.

### (Formation of a small-diameter nugget)

In actual spot welding, the diameter of the tip of electrodes 14 decreases due to deformation and wear. As a result, when the current of the same value is fed, the current density of the electrodes 14 gradually changes. Generally, the current density of electrodes 14 tends to decrease, hence the nugget diameter decreases, with the increase in the number of times of welding, namely the number of shots. As described above, the nugget diameter is determined by the current value of the low-frequency second energization. The spot welding was performed by decreasing the current value of the second energization so that the nugget diameter becomes smaller than 6 mm (5.4 mm, 4.9 mm, and 4.4 mm). Other conditions of the spot welding were the same as those in Example 1 and Comparative Examples 1 and 3, where the diameter of the electrodes 14 was 6 mm.

### (Formation of a small-diameter nugget in Example 1)

By setting the current value in the second energization to be 6.5 kA, 6.0 kA, and 5.5 kA, the nugget diameter was respectively made to be 5.4 mm, 4.9 mm, and 4.4 mm. The number of cycles in the second energization was 14 cycles. The number of samples of welded structural member 1 was five. These conditions are the same as those in Comparative Examples 1 and 3, which will be described later.

When the nugget diameter was 5.4 mm, the breaking force of each welded structural member 1 was 7.21 kN, 6.82 kN, 7.15 kN, 6.96 kN, and 6.26 kN respectively, the average value of breaking force F_{AV} was 6.88 kN, the range R was 0.95 kN, the standard deviation (σ) was 0.34 kN, and F_{AV}/ND was 1.27 kN/mm.

When the nugget diameter was 4.9 mm, the breaking force of each welded structural member 1 was 5.70 kN, 5.84 kN, 5.87 kN, 5.60 kN, an 5.68 kN respectively, the average value of breaking force F_{AV} was 5.74 kN, the range R was 0.27 kN, the standard deviation (σ) was 0.10 kN, and F_{AV}/ND was 1.17 kN/mm.

When the nugget diameter was 4.4 mm, the breaking force of each welded structural member 1 was 5.99 kN, 6.28 kN, 5.99 kN, 5.59 kN, and 5.55 kN respectively, the average value of breaking force F_{AV} was 5.88 kN, the range R was 0.73 kN, the standard deviation (σ) was 0.27 kN, and F_{AV}/ND was 1.34 kN/mm. Measurement values obtained by these cross tensile tests are summarized in Table 2 together with the case where the nugget diameter was 6 mm.

**[Table 2]**

| | | Example 1 | | | |
|---|---|---|---|---|---|
| Welding condition | | Cooling for 1.0 sec. and then High-frequency energization (29 kW) × 0.7 sec. | | | |
| Assumed nugget diameter ND | | 6.0 mm | 5.4 mm | 4.9 mm | 4.4 mm |
| Breaking force F (kN) | 1^{st} time | 8.39 kN | 7.21 kN | 5.70 kN | 5.99 kN |
| | 2^{nd} time | 8.02 kN | 6.82 kN | 5.84 kN | 6.28 kN |
| | 3^{rd} time | 7.90 kN | 7.15 kN | 5.87 kN | 5.99 kN |
| | 4^{th} time | 7.26 kN | 6.96 kN | 5.60 kN | 5.59 kN |
| | 5^{th} time | 8.64 kN | 6.26 kN | 5.68 kN | 5.55 kN |
| Favg (kN) | | 8.04 kN | 6.88 kN | 5.74 kN | 5.88 kN |
| Range R | | 1.38 | 0.95 | 0.27 | 0.73 |
| Standard deviation σ | | 0.47 | 0.34 | 0.10 | 0.27 |
| Favg/ND (kN.mm) | | 1.34 | 1.27 | 1.17 | 1.34 |

### (Formation of a small-diameter nugget in Comparative Example 1)

By setting the current value of the second energization to be the same as that in Example 1, welded structural members having respective nugget diameter of 5.4 mm, 4.9 mm, and 4.4 mm were produced. The number of welded structural member samples was five.

When the nugget diameter was 5.4 mm, the breaking force of each welded structural member was 3.03 kN, 3.03 kN, 2.89 kN, 3.22 kN, and 3.10 kN respectively, the average value of breaking force F_{AV} was 3.05 kN, the range R was 0.33 kN, the standard deviation (σ) was 0.11 kN, and F_{AV}/ND was 0.57 kN/mm. When the nugget diameter was 4.9 mm, the breaking force of each welded structural member was 2.90 kN, 3.36 kN, 3.44 kN, 3.12 kN, and 3.02 kN respectively, the average value of breaking force F_{AV} was 3.17 kN, the range R was 0.54 kN, the standard deviation (σ) was 0.20 kN, and F_{AV}/ND was 0.65 kN/mm. When the nugget diameter was 4.4 mm, the breaking force of each welded structural member was 2.61 kN, 2.50 kN, 2.23 kN, 2.16 kN, and 2.80 kN respectively, the average value of breaking force F_{AV} was 2.46 kN, the range R was 0.64 kN, the standard deviation (σ) was 0.24 kN, and F_{AV}/ND was 0.56 kN/mm. Measurement values obtained by these cross tensile tests are summarized in Table 3 together with the case where the nugget diameter was 6 mm.

**[Table 3]**

| | | Comparative Example 1 | | | |
|---|---|---|---|---|---|
| Welding condition | | Normal welding | | | |
| Assumed nugget diameter ND | | 6.0 mm | 5.4 mm | 4.9 mm | 4.4 mm |
| Breaking force F (kN) | 1^{st} time | 4.60 kN | 3.03 kN | 2.90 kN | 2.61 kN |
| | 2^{nd} time | 4.20 kN | 3.03 kN | 3.36 kN | 2.50 kN |
| | 3^{rd} time | 4.50 kN | 2.89 kN | 3.44 kN | 2.23 kN |
| | 4^{th} time | 4.59 kN | 3.22 kN | 3.12 kN | 2.16 kN |
| | 5^{th} time | 4.20 kN | 3.10 kN | 3.02 kN | 2.80 kN |
| Favg (kN) | | 4.45 kN | 3.05 kN | 3.17 kN | 2.46 kN |
| Range R | | 0.40 | 0.33 | 0.54 | 0.64 |
| Standard deviation σ | | 0.15 | 0.11 | 0.20 | 0.24 |
| Favg/ND (kN.mm) | | 0.74 | 0.57 | 0.65 | 0.56 |

### (Formation of a small-diameter nugget in Comparative Example 3)

By setting the current value of the second energization to be the same as that in Example 1, welded structural members having respective nugget diameter of 5.4 mm, 4.9 mm, and 4.4 mm were produced. The number of welded structural member samples was five.

When the nugget diameter was 5.4 mm, the breaking force of each welded structural member was 5.73 kN, 6.39 kN, 7.72 kN, 7.06 kN, and 6.50 kN respectively, the average value of breaking force F_{AV} was 6.68 kN, the range R was 1.99 kN, the standard deviation (σ) was 0.67 kN, and F_{AV}/ND was 1.24 kN/mm. When the nugget diameter was 4.9 mm, the breaking force of each welded structural member 1 was 6.03 kN, 6.62 kN, 6.64 kN, 5.66 kN, and 5.60 kN respectively, the average value of breaking force F_{AV} was 6.11 kN, the range R was 1.04 kN, the standard deviation (σ) was 0.45 kN, and F_{AV}/ND was 1.25 kN/mm. When the nugget diameter was 4.4 mm, the breaking force of each welded structural member 1 was 5.34 kN, 5.91 kN, 5.77 kN, 5.13 kN, and 5.16 kN respectively, the average value of breaking force F_{AV} was 5.46 kN, the range R was 0.78 kN, the standard deviation (σ) was 0.32 kN, and F_{AV}/ND was 1.24 kN/mm. Measurement values obtained by these cross tensile tests are summarized in Table 4 together with the case where the nugget diameter was 6 mm.

**[Table 4]**

| | | Comparative Example 3 | | | |
|---|---|---|---|---|---|
| Welding condition | | Electric furnace at 300°C for 30 min. after normal welding | | | |
| Assumed nugget diameter ND | | 6.0 mm | 5.4 mm | 4.9 mm | 4.4 mm |
| Breaking force F (kN) | 1^{st} time | 7.75 kN | 5.73 kN | 6.03 kN | 5.34 kN |
| | 2^{nd} time | 7.60 kN | 6.39 kN | 6.62 kN | 5.91 kN |
| | 3^{rd} time | 7.95 kN | 7.72 kN | 6.64 kN | 5.77 kN |
| | 4^{th} time | 8.15 kN | 7.06 kN | 5.66 kN | 5.13 kN |
| | 5^{th} time | 8.11 kN | 6.50 kN | 5.60 kN | 5.16 kN |
| Favg (kN) | | 7.91 kN | 6.68 kN | 6.11 kN | 5.46 kN |
| Range R | | 0.55 | 1.99 | 1.04 | 0.78 |
| Standard deviation σ | | 0.21 | 0.67 | 0.45 | 0.32 |
| Favg/ND (kN.mm) | | 1.32 | 1.24 | 1.25 | 1.24 |

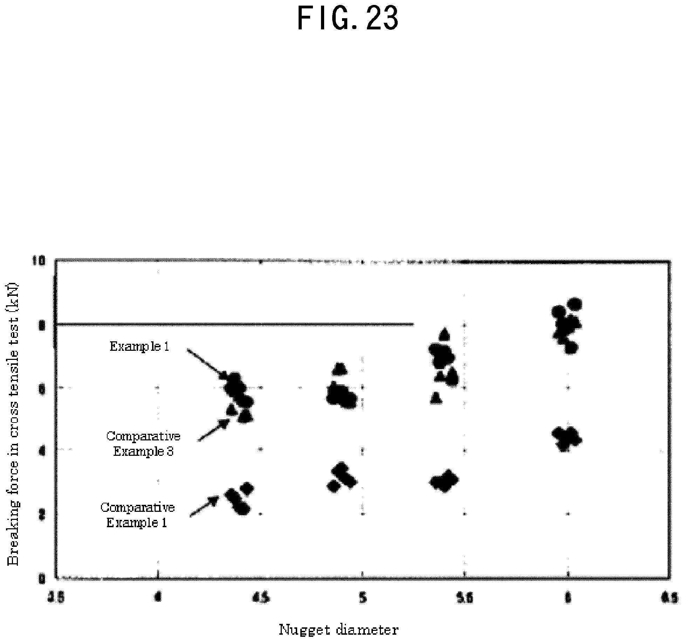

FIG 23 is a chart showing the relation between the breaking force and nugget diameter of the spot-welded members 1 produced in Example 1 and Comparative Examples 1 and 3. The vertical axis represents breaking force (kN), and the horizontal axis represents nugget diameter (mm). As shown in FIG. 23, the breaking force of the welded structural member 1 in Example 1 at the time of cross tensile test easily fell within a range from approximately 6 to 8 kN or higher. These values are approximately twice the breaking force in Comparative Example 1, which was 2 to 4 kN or higher, and similar to the breaking force in Comparative Example 3, where heat treatment was performed in the electric furnace after low-frequency energization was conducted. In Example 1, by adjusting high-frequency power in post heating, the breaking force of the welded structural member 1 of the present invention in the cross tensile test can also be made to be 8 kN or higher, provided that the nugget diameter is 6 mm. This breaking force is twice or higher that of the conventional welded structural member, namely the breaking force in Comparative Example 1. The breaking force of the welded structural member 1 in Example 1 was thus made to be much higher than that in Comparative Example 1, where the spot-welding was performed by the low-frequency power supply 16 only.

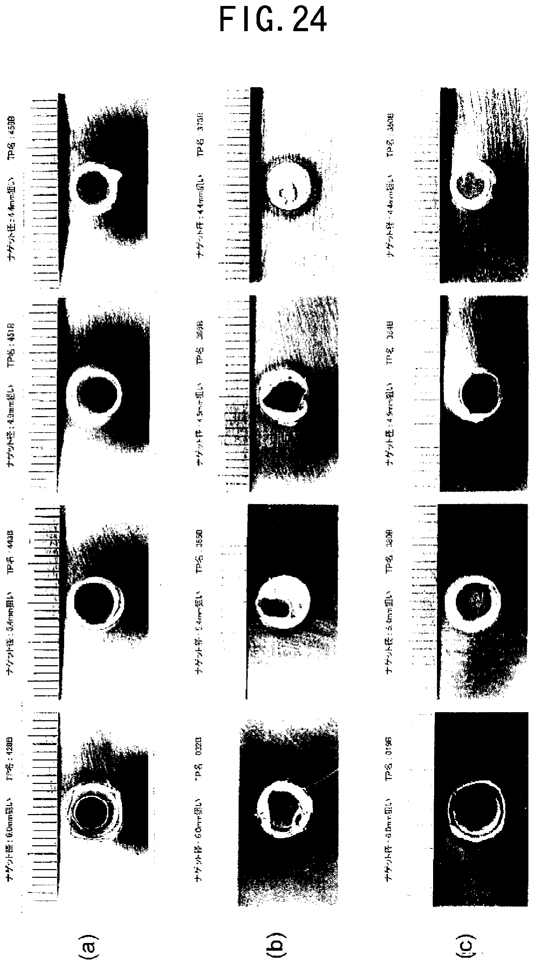

FIG. 24 provides optical images of the appearance of the spot-welded members 1 produced in Example 1 and Comparative Examples 3 obtained after the tensile test was performed, where (a) exhibits the image in Example 1, (b) Comparative Example 1, and (c) Comparative Example 3. As is evident in FIG. 24, the plug rupture occurred in Example 1 and Comparative Example 3 even when the nugget diameter was varied. Meanwhile, in Comparative Example 1, the interfacial rupture or the partial plug rupture occurred even when the nugget diameter was varied, and the plug rupture in Example 1 and Comparative Example 2 did not occur.

The results of the cross tensile test in Example and Comparative Examples to find the breaking force described above show that in welding of two 1.2 mm-thick steel plates, the breaking force of the welded part and breaking mode can be improved by providing a certain cooling period after low-frequency welding, and after the temperature of the whole welded part has decreased to Mf point or lower, allowing the heat of heat storage ring having been generated on the outer periphery of the welded part by high-frequency energization to flow into the welded part, thereby tempering the welded part in the quenched state.

The cooling of welded part depends largely on the heat removal into electrodes 14, and the cooling progresses from the center of the welded part toward the outer periphery. With the electrodes 14 having diameter of 6 mm, the cooling time of 0.7 sec. or longer was found to be necessary for the temperature of the entire welded part to decrease to the Mf point or lower, approximately 300°C.

### [Example 2]

### (Spot welding of three steel plates)

Then, the spot welding was performed by overlapping three steel plates 2 used in Example 1.

Spot welding of three steel plates 2 was performed in the same manner as Example 1. Energization pattern is shown below.
Rise of a first current by low-frequency first energization: 1 cycle (0.02 sec.)
Low-frequency first energization: 9.0 kA, 1 cycle (0.02 sec.)
Low-frequency cooling: 1 cycle (0.02 sec.)
Low-frequency second energization: 6.5 kA, 14 cycles (0.28 sec.)
Cooling period: 60 cycles (1.2 sec.)
High-frequency energization: 29 kW, 0.6 sec.
Hold time: 1 cycle (0.02 sec.)

### (Comparative Example 4)

As Comparative Example 4 with respect to Example 2, the spot welding of three steel plates 2 was performed in the same manner as Comparative Example 1. The energization pattern is shown below.
Rise of a first current by first energization: 1 cycle (0.02 sec.)
First energization: 9 kA, 1 cycle (0.02 sec.)
Cooling: 1 cycle (0.02 sec.)
Second energization: 6.5 kA, 14 cycles (0.28 sec.)
Third energization: 3.3 kA, 5 cycles (0.1 sec.)
Hold time: 1 cycle (0.2 sec.)

### (Comparative Example 5)

As Comparative Example 5 with respect to Example 2, the spot welding of three steel plates 2 was performed in the same manner as Comparative Example 2. Welding was performed by energization in the energization pattern in Comparative Example 2 by the low-frequency power supply 16 only, and the welded steel plates were subjected to the heat treatment in the electric furnace at 300°C for 30 minutes.

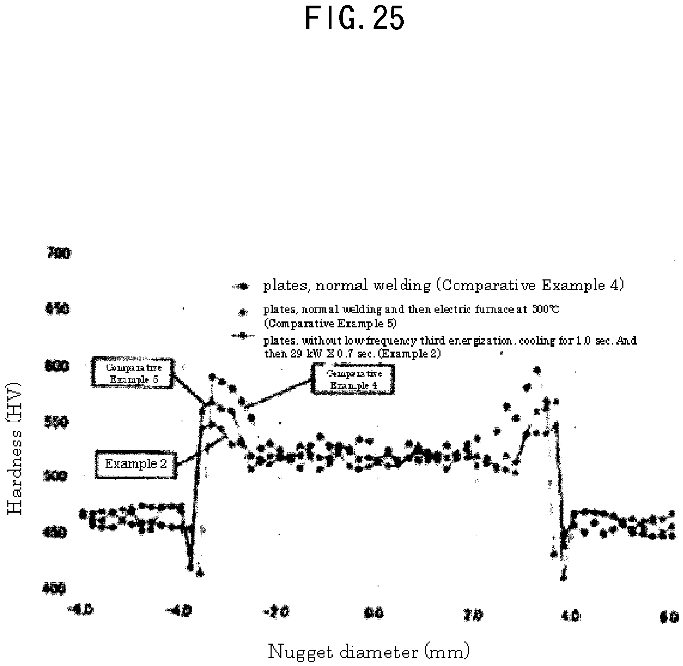

FIG. 25 is a chart showing an example of the hardness distribution on the cross section almost at the center of the spot-welded part 3 of the spot-welded members 1 produced in Example 2 and Comparative Examples 4 and 5. The horizontal axis represents the positions of the spot-welded part 3 in a direction along the overlapped part of the three steel plates 2, 2, corresponding to the cross section of the spot-welded part 3. The vertical axis represents Vickers hardness (HV). The Vickers hardness (HV) of the steel plates 2 (base material) before spot welding was approximately 465 HV. The current of the second low-frequency energization in Example 2 and Comparative Examples 4 and 5 shown in FIG. 25 was 6.5 kA, and the assumed nugget diameter was approximately 6 mm.

As shown in FIG. 25, in the case of Example 2, it was found that the hardness on the left side of the measurement position, namely the outer-left side of the heat-affected zone 5 was 470 HV, that on the left side of the heat-affected zone 5 fell within a range from 530 to 550 HV, that in the molten and solidified part 4 was 520 HV, that on the right side of the heat-affected zone 5 was 550 HV, and that on the outer-right side of the heat-affected zone 5 was 470 HV. The hardness distribution in Example 2 exhibits that the hardness is generally lower than that by the normal welding in Comparative Example 4, and the hardness was in a semi-elliptic shape, the hardness of the shoulder being lower than that of Comparative Example 4.

As shown in FIG. 25, the hardness distribution in Comparative Example 5 is in a shape similar to that in Comparative Example 4, but the hardness is approximately 20 to 30 HV lower over the entire positions.

The hardness distribution of the spot-welded part 3 in Example 2 and that in Comparative Example 4 are compared. The hardness of Example 2 is found to be lower over the entire positions although there are angles such as those generated on the outermost side of the heat-affected zone in Comparative Example 4. The hardness at the center of the molten and solidified part 4 fell within a range approximately from 520 to 530 HV, which is higher than the hardness of the base material, 465 HV, by approximately 55 to 65 HV.

The hardness distributions of the spot-welded part 3 in Example 2 and that in Comparative Example 5 are compared. The hardness of Example 2 is found to be lower over the entire positions although there are angles such as those generated on the outermost side of the heat-affected zone in Comparative Example 5. The hardness at the center of the molten and solidified part 4 in Example 2 is found to be lower than that of Comparative Example 5 by approximately 10 to 20 HV.

### (Observation of the structure on the cross section at the edge of nugget)

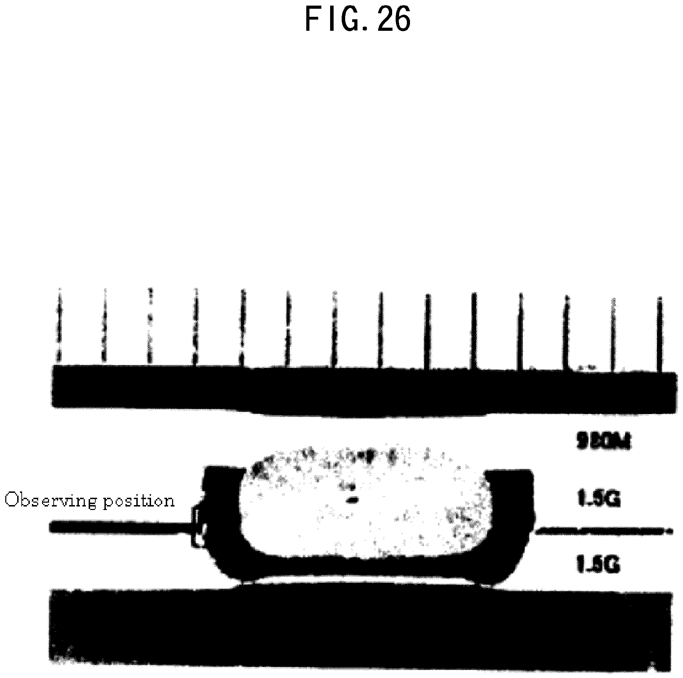

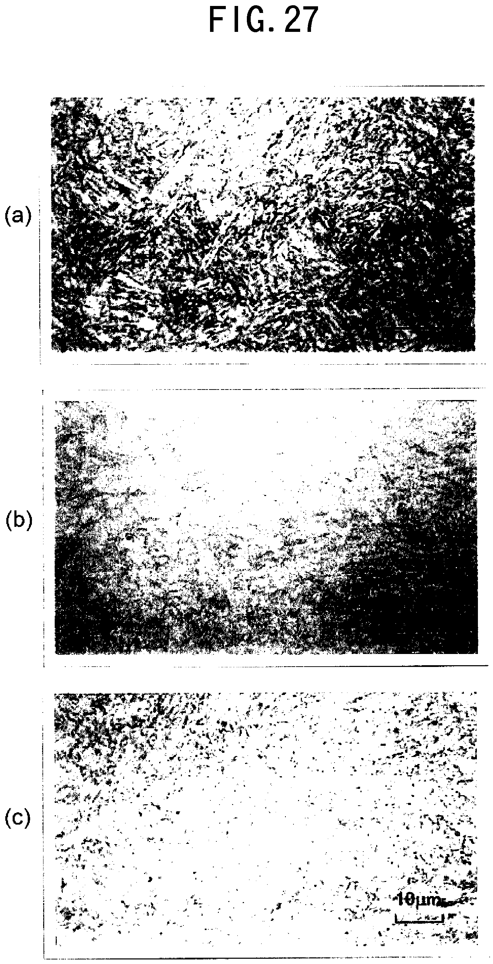

FIG. 26 is a cross-sectional view showing the region of welded part of steel plates 2 whose structure was observed. FIG. 27 is a cross-sectional view showing the region where the structure of the welded part of the steel plates 2 was observed, where (a) to (c) are optical images (1000× magnification) respectively showing the structure of the cross section at the end of the nugget in Example 2 and Comparative Examples 4 and 5. As shown in FIG. 27 (a), the structure on the cross section at the end of the nugget in Example 2 is a tempered martensite structure. As shown in FIG. 27 (b), the structure of the cross section at the end of the nugget in Comparative Example 4 is the quenched martensite structure. As shown in FIG. 27(c), the structure of the cross section at the end of the nugget in Comparative Example 5 is the tempered martensite structure.

The welding samples in Example 2 and Comparative Examples 4 and 5 were subjected to a cross tensile test to find their breaking force F (kN). The number of samples of welded structural member 1 in Example 2 was five. Assuming that the nugget diameter was 6 mm, the breaking force of welded structural members 1 in Example 2 was 8.07 kN, 8.54 kN, 8.75 kN, 8.86 kN, and 9.09 kN respectively, the average value of breaking force F_{AV} was 8.66 kN, the range R of difference between the maximum and the minimum values of breaking force was 1.02 kN, standard deviation (σ) was 0.35 kN, and the ratio of average value of breaking force F_{AV} to the diameter of the nugget (F_{AV}/ND) was 1.42 kN/mm. Measurement values obtained by these cross tensile tests are summarized in Table 5.

**[Table 5]**

| | | Example 2 | |
|---|---|---|---|
| Welding condition | | Normal welding + Cooling + High-frequency energization | |
| Assumed nugget diameter ND | | Approx. 6.1 mm | |
| Breaking force F (kN) and breaking mode | 1^{st} time | 8.07 kN | ○ |
| | 2^{nd} time | 8.54 kN | ○ |
| | 3^{rd} time | 8.75 kN | ○ |
| | 4^{th} time | 8.86 kN | ○ |
| | 5^{th} time | 9.09 kN | ○ |
| Favg (kN) | | 8.66 kN | |
| Range R | | 1.02 | |
| Standard deviation σ | | 0.35 | |
| Favg/ND (kN.mm) | | 1.42 | |

| | | | |
|---|---|---|---|
| Breaking mode: O: Plug rupture or equivalent ×: Interfacial rupture, Partial plug rupture | | | |

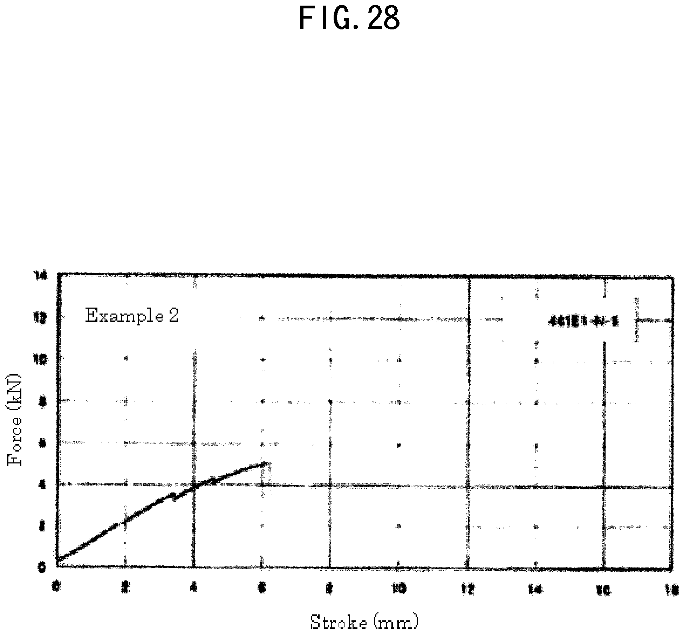

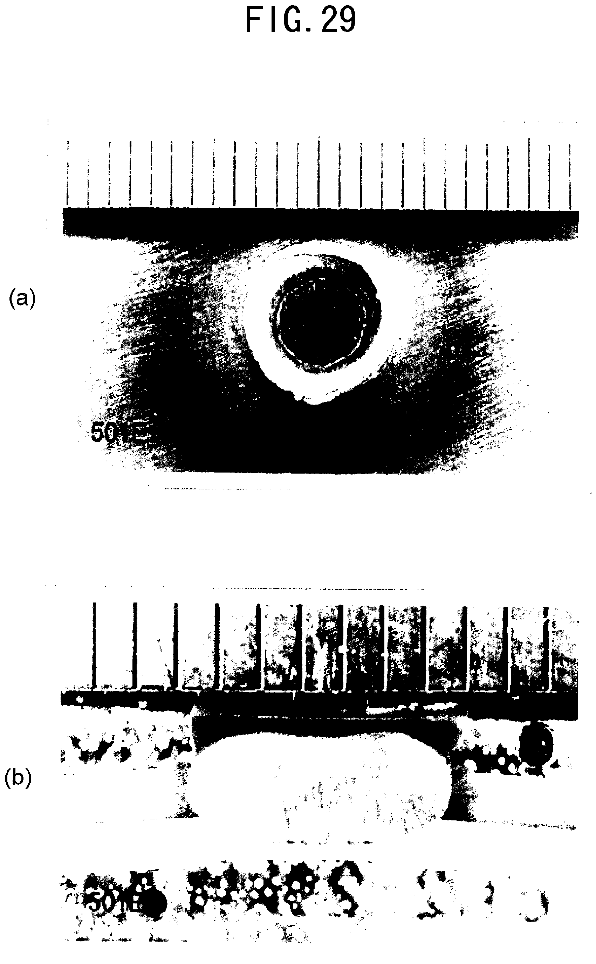

FIG. 28 is a chart showing the relation between the stroke and the force F in the cross tensile test in Example 2. FIG. 29 provides optical images of the nugget of the welded part ruptured by the cross tensile test, where (a) shows the appearance and (b) shows the cross section. FIG. 28 shows a case of the cross tensile test where the nugget diameter was 6 mm and breaking force was 9.09 kN. As shown in FIG. 28, all of the welded structural members 1 in Example 2 were broken by the plug rupture.

The welded structural members in Comparative Example 4 were produced by the low-frequency welding, and the number of samples was five.

Assuming that the nugget diameter was 6 mm, the breaking force of welded structural members was 4.53 kN, 5.27 kN, 5.36 kN , 4.9 kN, and 4.99 kN respectively, the average value of breaking force F_{AV} was 5.01 kN, the range R was 0.83 kN, the standard deviation (σ) was 0.29 kN, and F_{AV}/ND was 0.82 kN/mm. The measurement values obtained by these cross tensile tests are summarized in Table 6.

**[Table 6]**

| | | Comparative Example 4 | |
|---|---|---|---|
| Welding condition | | Normal welding + Tempering in electric furnace | |
| Assumed nugget diameter ND | | Approx. 6.1 mm | |
| Breaking force F (kN) and breaking mode | 1^{st} time | 4.53 kN | × |
| | 2^{nd} time | 5.27 kN | × |
| | 3^{rd} time | 5.36 kN | × |
| | 4^{th} time | 4.90 kN | × |
| | 5^{th} time | 4.99 kN | × |
| Favg (kN) | | 5.01 kN | |
| Range R | | 0.83 | |
| Standard deviation σ | | 0.29 | |
| Favg/ND (kN.mm) | | 0.82 | |

| | | | |
|---|---|---|---|
| Breaking mode: O: Plug rupture or equivalent ×: Interfacial rupture, Partial plug rupture | | | |

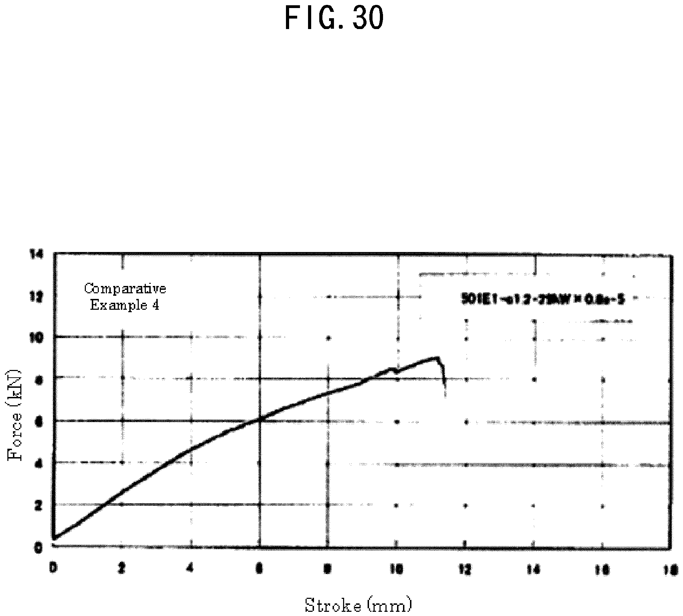

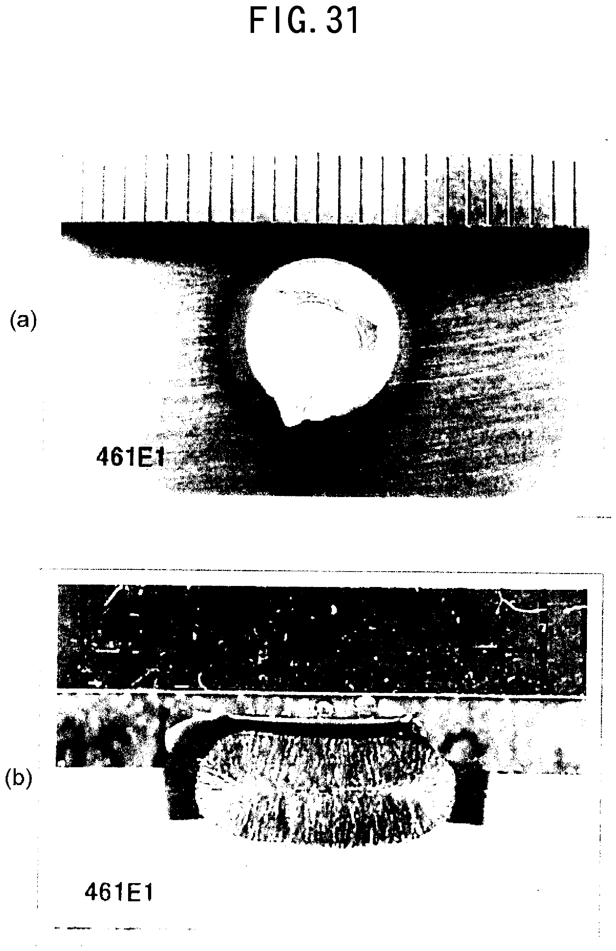

FIG. 30 is a chart showing the relation between the stroke and the force F in the cross tensile test in Comparative Example 4. FIG. 31 provides optical images showing the cross section of the nugget in the welded part ruptured in the cross tensile test in Comparative Example 4, where (a) shows the appearance and (b) shows the cross section. FIG. 30 shows a case of the cross tensile test where the nugget diameter was 6 mm and breaking force was approximately 5 kN. As shown in FIG. 31, in Comparative Example 4, the nugget and the heat-affected zone were quenched, hence their structure became hard and brittle. Since the tensile test was conducted in this state, cracks progressed toward the center of the nugget instantaneously, and as a result, the interfacial rupture occurred. The breaking force of the welded structural members in Comparative Example 4 was approximately half that in Example 2. The rupture of the welded structural members in Comparative Example 4 is assumed to be the rupture of the molten and solidified part, and the plug rupture such as that in Example 2 did not occur.

The welded structural members in Comparative Example 5 were produced by performing conventional low-frequency welding in Comparative Example 4, and then performing heat treatment using the electric furnace at 300°C for 30 minutes. The number of samples was five. When assumed nugget diameter was 6 mm, the breaking force of welded structural members were 8.99 kN, 8.50 kN, 8.58 kN, 9.53 kN, and 8.67 kN respectively, the average value of breaking force F_{AV} was 8.85 kN, the range R was 1.03 kN, the standard deviation (σ) was 0.38 kN, and F_{AV}/ND was 1.45 kN/mm. In Comparative Example 5, the plug rupture occurred to all of the welded structural members as in the case of Example 2. Measurement values obtained by these cross tensile tests are summarized in Table 7.

**[Table 7]**

| | | Comparative Example 7 | |
|---|---|---|---|
| Welding condition | | Normal welding + Tempering in electric furnace | |
| Assumed nugget diameter ND | | Approx. 6.1 mm | |
| Breaking force F (kN) and breaking mode | 1^{st} time | 8.99 kN | ○ |
| | 2^{nd} time | 8.50 kN | ○ |
| | 3^{rd} time | 8.58 kN | ○ |
| | 4^{th} time | 9.53 kN | ○ |
| | 5^{th} time | 8.67 kN | ○ |
| Favg (kN) | | 8.85 kN | |
| Range R | | 1.03 | |
| Standard deviation σ | | 0.38 | |
| Favg/ND (kN.mm) | | 1.45 | |

| | | | |
|---|---|---|---|
| Breaking mode: O: Plug rupture or equivalent ×: Interfacial rupture, Partial plug rupture | | | |

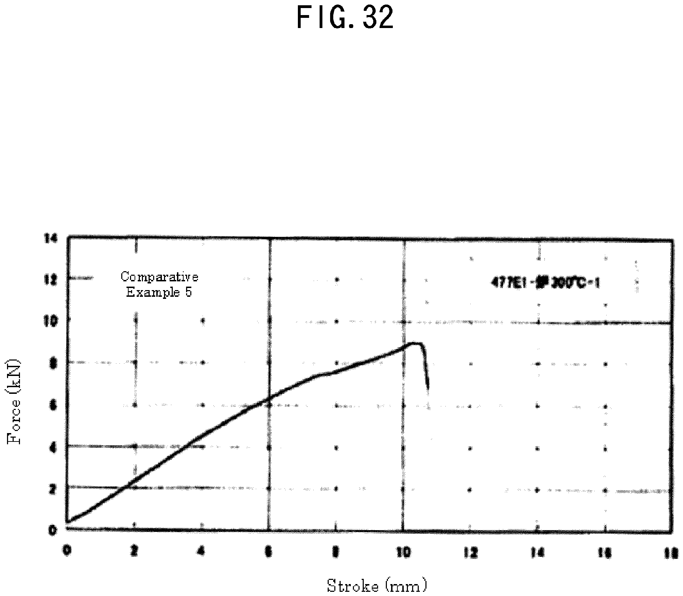

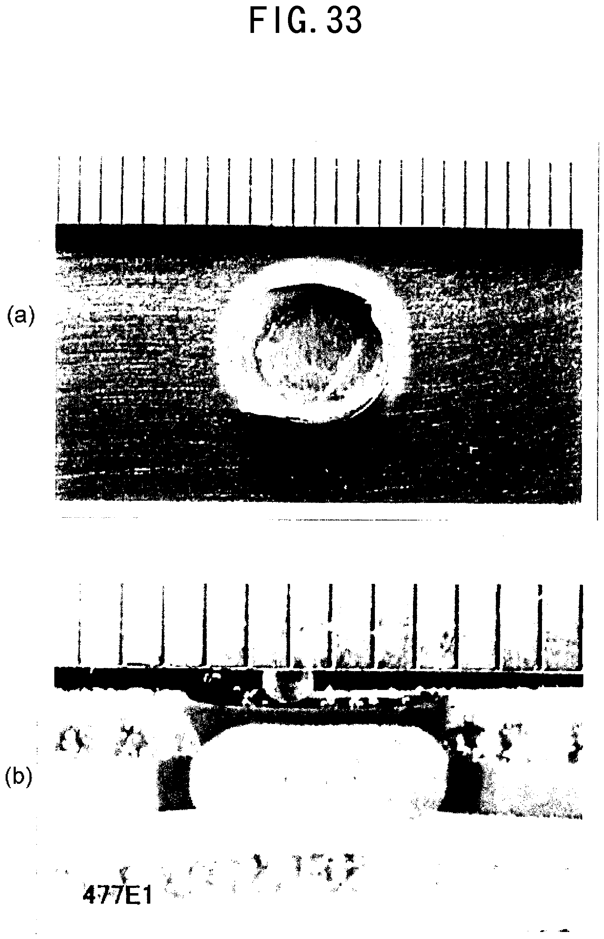

FIG. 32 is a chart showing the relation between the stroke and the force F in the cross tensile test in Comparative Example 5. FIG. 33 provides optical images showing the cross section of the nugget in the welded part ruptured in the cross tensile test in Comparative Example 5, where (a) shows the appearance and (b) shows the cross section. FIG. 32 shows a case of the cross tensile test where the nugget diameter was 6 mm and the breaking force was approximately 9 kN. As shown in FIG. 33, the breaking mode in Comparative Example 5 was the plug rupture as in the case of Comparative Example 2.

The results in Example 2 and Comparative Examples 4 and 5 are summarized as follows.

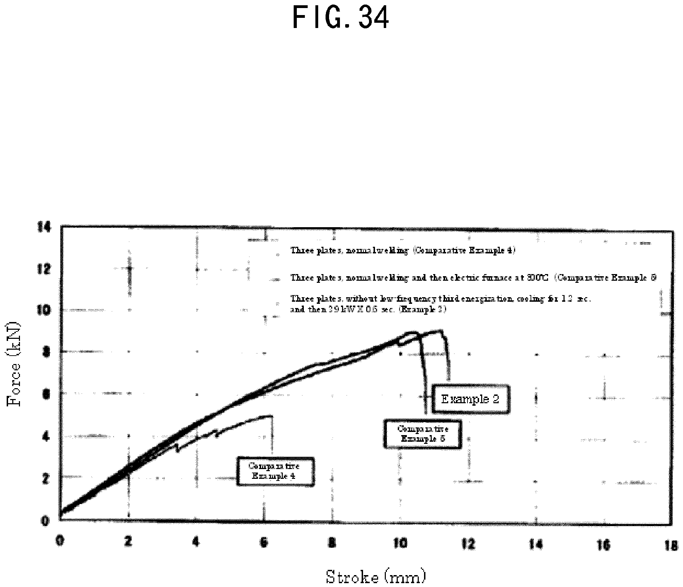

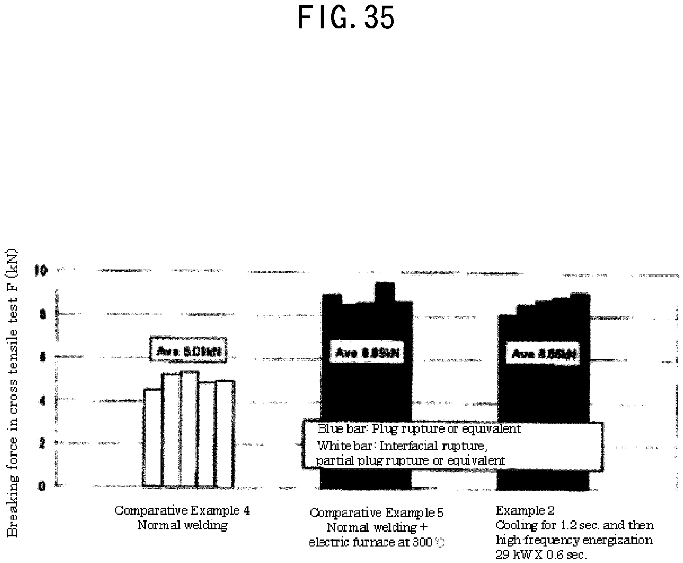

FIG. 34 is a chart showing the relation between the stroke and the force F in the cross tensile tests in Example 2 and Comparative Examples 4 and 5, and FIG. 35 is a chart showing the breaking fore in Example 2 and Comparative Examples 4 and 5. From FIGS. 34 and 35, it was found that according to Example 2, the breaking force similar to that in Comparative Example 5 can be obtained in the case of the spot welding of three steel plates 2 also, and that the breaking mode was the plug rupture, which has never been achieved by the conventional welding shown in Comparative Example 4.

The present invention is not limited to the embodiment described above, and can be modified within the scope of claims of the present invention. It is not without saying that those modifications are included in the scope of the present invention. The cooling time in the embodiment described above can be designed as required so that the predetermined cross rupture strength can be obtained in accordance with the application time of the low-frequency power, and carbon composition and the shape of the steel plates 2.

## Claims

1. A welded structural member (**1**), comprising: steel plates (**2**) bonded by overlapping the surfaces of the steel plates (**2**) and forming a welded part (**3**) by spot welding,
wherein the welded part (**3**) contains: a molten and solidified part (**4**), and a heat-affected zone (**5**) surrounding the molten and solidified part (**4**),
**characterized in that** the welded part (3) displays uniform hardness distribution without angles, and
the hardness on the welded surface is higher than the hardness of the base material of the steel plates, and increases along a direction from a region outside the heat-affected zone toward the heat-affected zone.

2. The welded structural member (**1**) as set forth in claim 1, wherein a metal structure of the heat-affected zone (**5**) and the molten and solidified part (**4**) is a tempered martensite structure.

3. The welded structural member (**1**) as set forth in claim 1, wherein the steel plates (**2**) in the heat-affected zone (**5**) are joined by solid-phase bonding.

4. The welded structural member (**1**) as set forth in claim 1, wherein a rupture path in the welded part (**3**) in a cross tensile test is a crack progressing along a region other than the molten and solidified part (**4**).

5. The welded structural member (**1**) as set forth in claim 1, wherein a bonding strength allows a crack progressing direction as a rupture path to change within the heat-affected zone (**5**) in a cross tensile test of the welded part (**3**).

6. A welding method, comprising:
sandwiching steel plates (**2**) whose surfaces are overlapped with each other by a pair of electrodes (**14**);
applying DC power or a power having a first frequency (**16**) to the pair of electrodes (**14**), thereby spot-welding the steel plates (**2**) by a welded part (**3**) thus formed;
applying a power having a second frequency (**18**) higher than the first frequency (**16**) to the electrodes (**14**); and
heating a proximity region of the outer periphery of an area where the steel plates (**2**) and the pair of electrodes (**14**) contact, and a connecting end region in the welded part (**3**) where the steel plates (**2**) are overlapped by the power having the second frequency (**18**),
**characterized in that** a cooling period is provided after the DC power or the power having the first frequency (**16**) is applied between the pair of electrodes (**14**) and before the application of the power having a second frequency (**18**), and
wherein the welded part (**3**) is cooled to a temperature lower than the martensite transformation finish point of the steel plates (**2**) during the cooling period.

7. The welding method as set forth in claim 6, wherein an application of pressure to the electrodes (**14**) is terminated after a predetermined time has elapsed since the start of application of power having the second frequency (**18**).

8. The welding method as set forth in claim 6 or 7, wherein when applying the power having the first frequency (**16**) to the pair of electrodes (**14**), a first energization from the low-frequency power supply (**16**) is performed, and then, after a predetermined period of time has elapsed, a second energization from the low-frequency power supply (**16**) is performed.

9. The welding method as set forth in claims 8, wherein after the first energization, another cooling is performed and then the second energization is performed.

10. The welding method as set forth in any one of claims 6 to 9, wherein two plates (**2**) are spot welded.

11. The welding method as set forth in any one of claims 6 to 9, wherein three steel plates (**2**) are spot welded.

## Patentansprüche

1. Geschweißtes Bauelement (1), umfassend: Stahlplatten (2), die durch Überlappen der Oberflächen der Stahlplatten (2) verbunden sind und durch Punktschweißen ein geschweißtes Teil (3) bilden,
wobei das geschweißte Teil (3) enthält: ein geschmolzenes und erstarrtes Teil (4) und eine wärmebeeinflusste Zone (5), die das geschmolzene und erstarrte Teil (4) umgibt,
**dadurch gekennzeichnet, dass** das Schweißteil (3) eine gleichmäßige Härteverteilung ohne Winkel aufweist und
die Härte an der geschweißten Oberfläche höher ist als die Härte des Grundmaterials der Stahlplatten und in einer Richtung von einem Bereich außerhalb der Wärmeeinflusszone in Richtung der Wärmeeinflusszone zunimmt.

2. Geschweißtes Bauteil (1) nach Anspruch 1, wobei eine Metallstruktur der Wärmeeinflusszone (5) und des geschmolzenen und erstarrten Teils (4) eine gehärtete Martensitstruktur ist.

3. Geschweißtes Bauteil (1) nach Anspruch 1, wobei die Stahlplatten (2) in der Wärmeeinflusszone (5) durch eine Festphasenverbindung verbunden sind.

4. Geschweißtes Bauteil (1) nach Anspruch 1, wobei ein Bruchpfad in dem geschweißten Teil (3) in einem Querzugversuch ein Riss ist, der entlang eines anderen Bereichs als dem geschmolzenen und erstarrten Teil (4) verläuft.

5. Geschweißtes Bauteil (1) nach Anspruch 1, wobei eine Haftfestigkeit eine Rissfortschrittsrichtung als Bruchpfad innerhalb der Wärmeeinflusszone (5) in einem Querzugversuch des geschweißten Bauteils (3) ändern lässt.

6. Schweißverfahren, umfassend:
Sandwich-Stahlplatten (2), deren Oberflächen von einem Elektrodenpaar (14) überlappt werden;
Anlegen von Gleichstrom oder einer Leistung mit einer ersten Frequenz (16) an das Elektrodenpaar (14), wodurch die Stahlplatten (2) mit einem so gebildeten Schweißteil (3) punktgeschweißt werden;
Anlegen einer Leistung mit einer zweiten Frequenz (18) höher als die erste Frequenz (16) an die Elektroden (14); und
Erwärmen eines Annäherungsbereichs des äußeren Umfangs eines Bereichs, in dem sich die Stahlplatten (2) und das Elektrodenpaar (14) berühren, und eines Verbindungsendbereichs in dem Schweißteil (3), in dem die Stahlplatten (2) von der Leistung mit der zweiten Frequenz (18) überlagert werden,
**dadurch gekennzeichnet, dass** eine Kühlperiode vorgesehen ist, nachdem die Gleichstromleistung oder die Leistung mit der ersten Frequenz (16) zwischen dem Elektrodenpaar (14) und vor dem Anlegen der Leistung mit einer zweiten Frequenz (18) angelegt wurde, und
wobei das geschweißte Teil (3) während der Kühlzeit auf eine Temperatur gekühlt wird, die niedriger ist als der Martensitumwandlungs-Endpunkt der Stahlplatten (2).

7. Schweißverfahren nach Anspruch 6, bei dem eine Druckbeaufschlagung der Elektroden (14) nach Ablauf einer vorbestimmten Zeit seit Beginn der Leistungsbeaufschlagung mit der zweiten Frequenz (18) beendet wird.

8. Schweißverfahren nach Anspruch 6 oder 7, wobei beim Anlegen der Leistung mit der ersten Frequenz (16) an das Elektrodenpaar (14) eine erste Erregung aus der Niederfrequenzstromversorgung (16) durchgeführt wird, und dann, nach Ablauf eines vorherbestimmten Zeitraums, eine zweite Erregung aus der Niederfrequenzstromversorgung (16) durchgeführt wird.

9. Schweißverfahren nach Anspruch 8, bei dem nach der ersten Erregung eine weitere Kühlung und dann die zweite Erregung durchgeführt werden.

10. Schweißverfahren nach einem der Ansprüche 6 bis 9, bei dem zwei Bleche (2) punktgeschweißt werden.

11. Schweißverfahren nach einem der Ansprüche 6 bis 9, bei dem drei Stahlplatten (2) punktgeschweißt werden.

## Revendications

1. Élément structurel soudé (1) comprenant : des tôles en acier (2) liées par chevauchement des surfaces des tôles en acier (2) et formation d'une partie soudée (3) par soudage par points,
dans lequel la partie soudée (3) contient : une partie fondue et solidifiée (4), et une zone affectée thermiquement (5) entourant la partie fondue et solidifiée (4),
**caractérisé en ce que** la partie soudée (3) présente une répartition uniforme de dureté sans angles, et
la dureté de la surface soudée est supérieure à la dureté du matériau de base des tôles en acier, et augmente le long d'une direction d'une région extérieure à la zone affectée thermiquement vers la zone affectée thermiquement.

2. Élément structurel soudé (1) selon la revendication 1, dans lequel une structure métallique de la zone affectée thermiquement (5) et de la partie fondue et solidifiée (4) est une structure de martensite revenue.

3. Élément structurel soudé (1) selon la revendication 1, dans lequel les tôles en acier (2) dans la zone affectée thermiquement (5) sont assemblées par liaison par diffusion.

4. Élément structurel soudé (1) selon la revendication 1, dans lequel un trajet de rupture dans la partie soudée (3) lors d'un essai de traction en croix est une fissure progressant le long d'une région autre que la partie fondue et solidifiée (4).

5. Élément structurel soudé (1) selon la revendication 1, dans lequel une force d'adhérence permet à une direction de progression de fissure, en tant que trajet de rupture, de changer au sein de la zone affectée thermiquement (5), lors d'un essai de traction en croix sur la partie soudée (3).

6. Procédé de soudage comprenant les étapes suivantes :
prendre en sandwich des tôles en acier (2) dont les surfaces se chevauchent entre elles, entre une paire d'électrodes (14) ;
appliquer une puissance en courant continu ou une puissance ayant une première fréquence (16) à la paire d'électrodes (14), en soudant ainsi par points les tôles en acier (2) au moyen d'une partie soudée (3) ainsi formée ;
appliquer une puissance ayant une seconde fréquence (18) supérieure à la première fréquence (16) aux électrodes (14) ; et
chauffer une région de proximité de la périphérie extérieure d'une aire où les tôles en acier (2) et la paire d'électrodes (14) entrent en contact, et une région d'extrémité de liaison dans la partie soudée (3) où les tôles en acier (2) se chevauchent, au moyen de la puissance ayant la seconde fréquence (18),
**caractérisé en ce qu'**une période de refroidissement est ménagée après que la puissance en courant continu ou la puissance ayant la première fréquence (16) a été appliquée entre la paire d'électrodes (14) et avant l'application de la puissance ayant la seconde fréquence (18), et
dans lequel la partie soudée (3) est refroidie à une température inférieure au point final de transformation martensitique des tôles en acier (2) au cours de la période de refroidissement.

7. Procédé de soudage selon la revendication 6, dans lequel une application de pression sur les électrodes (14) prend fin après qu'un temps prédéterminé s'est écoulé depuis le début de l'application de la puissance ayant la seconde fréquence (18).

8. Procédé de soudage selon la revendication 6 ou 7, dans lequel lors de l'application de la puissance ayant la première fréquence (16) à la paire d'électrodes (14), une première mise sous tension à partir de l'alimentation électrique à basse fréquence (16) est réalisée, puis après qu'une période de temps prédéterminée s'est écoulée, une seconde mise sous tension à partir de l'alimentation électrique à basse fréquence (16) est réalisée.

9. Procédé de soudage selon la revendication 8, dans lequel après la première mise sous tension, un autre refroidissement est réalisé, puis la seconde mise sous tension est réalisée.

10. Procédé de soudage selon l'une quelconque des revendications 6 à 9, dans lequel deux tôles (2) sont soudées par points.

11. Procédé de soudage selon l'une quelconque des revendications 6 à 9, dans lequel trois tôles en acier (2) sont soudées par points.
